# EUROPÄISCHE PATENTSCHRIFT

(11) **EP 3 331 804 B1**
(45) Veröffentlichungstag und Bekanntmachung des Hinweises auf die Patenterteilung: **20.10.2021**
(21) Anmeldenummer: 16751236.7
(22) Anmeldetag: 02.08.2016
(51) Int. Cl.: B66B 25/00

(54) **PERSONENFÖRDERVORRICHTUNG MIT ÜBERWACHUNGSEINRICHTUNG**
HUMAN TRANSPORT DEVICE HAVING A MONITORING APPARATUS
DISPOSITIF DE TRANSPORT DE PERSONNES ÉQUIPÉ D'UN MOYEN DE SURVEILLANCE

(30) Priorität: 03.08.2015 DE 102015214764; 10.06.2016 ES 201630799
(43) Veröffentlichungstag der Anmeldung: 13.06.2018
(73) Patentinhaber: TK Elevator Innovation and Operations GmbH, 40472 Düsseldorf (DE)
(72) Erfinder: AKYURT, Irfan, 22043 Hamburg (DE); BUSEMANN, Christopher, 20095 Hamburg (DE); CASTAÑO LANTERO, Aurelio, 33900 Langreo (Asturias) (ES)
(74) Vertreter: Jacobi, Nicolas
(86) Internationale Anmeldenummer: PCT/EP2016/068391
(87) Internationale Veröffentlichungsnummer: WO 2017/021393

(56) Entgegenhaltungen:
- EP-A1- 1 939 127
- WO-A1-2015/102031
- DE-U1- 9 218 928

## Beschreibung

Die Erfindung betrifft eine Personenfördervorrichtung, insbesondere eine Fahrtreppe oder einen Fahrsteig, welche eine Mehrzahl von zu einem endlosen Transportband verbundenen Trittelementen, wenigstens eine Antriebseinheit zum Antreiben des Transportbandes und eine Überwachungseinrichtung zur Erkennung einer fehlerhaften Anordnung wenigstens eines Trittelementes im Transportband umfasst. Die Trittelemente des angetriebenen Transportbandes durchlaufen dabei zwischen einer ersten Umkehrstation und einer zweiten Umkehrstation einen Transportbereich und einen Rücklaufbereich.

Ist die Personenfördervorrichtung eine Fahrtreppe, so ist aus einer Mehrzahl von Stufen als Trittelementen ein endloses Stufenband als Transportband gebildet. Ist die Personenfördervorrichtung ein Fahrsteig, so ist aus einer Mehrzahl von Paletten als Trittelementen ein endloses Palettenband als Transportband gebildet.

Bei einer Ausgestaltung der Personenfördervorrichtung als Fahrtreppe ist die erste Umkehrstation üblicherweise auf einer ersten Stockwerksebene angeordnet und die zweite Umkehrstation auf einer zweiten Stockwerksebene, wobei die zweite Stockwerksebene bezüglich der ersten Stockwerksebene höher oder niedriger gelegen ist. Die Personenfördervorrichtung weist in diesem Fall also eine obere Umkehrstation und eine untere Umkehrstation auf. Hierbei ist insbesondere üblich, dass zum Antreiben des Stufenbandes der Fahrtreppe die obere Umkehrstation über ein Getriebe mit der Antriebseinheit verbunden ist. Bei einer Ausgestaltung der Personenfördervorrichtung als Fahrsteig sind üblicherweise eine vordere Umkehrstation und eine hintere Umkehrstation als erste Umkehrstation und zweite Umkehrstation vorgesehen.

Der Transportbereich der Personenfördervorrichtung ist der Bereich, in welchem Nutzer von der Personenfördervorrichtung transportiert werden, also insbesondere der Bereich, der von Nutzern betreten werden kann. Der Rücklaufbereich der Personenfördervorrichtung ist dagegen üblicherweise der Bereich, in welchem die Trittelemente wieder zum Anfang des Transportbereichs zurückgeführt werden und welcher üblicherweise für die Nutzer nicht sichtbar ist. Bei einigen Personenfördervorrichtung erfolgt die Umkehrung allerdings horizontal, sodass der Rücklaufbereich in der gleichen Ebene angeordnet ist, wie der Transportbereich. In solchen Fällen wird auch der Rücklaufbereich für den Transportbereich genutzt, der Rücklaufbereich ist in diesen Fällen somit zudem ein Transportbereich.

Die Trittelemente im Transportbereich und Rücklaufbereich haben insofern entgegengesetzte Bewegungsrichtungen. Der jeweilige Bewegungsrichtungswechsel der Trittelemente von dem Transportbereich in den Rücklaufbereich und von dem Rücklaufbereich in den Transportbereich wird dabei durch die Umkehrstationen realisiert.

Beim Betrieb einer Personenfördervorrichtung kann insbesondere ein Bruch eines Trittelementes oder ein Brechen eines Halteelementes oder einer Laufrolle des Trittelementes zu einer fehlerhaften Anordnung eines Trittelementes führen. Eine fehlerhafte Anordnung eines Trittelementes führt dabei insbesondere zu einem Absenken oder Herauslösen des Trittelementes aus dem Transportband und kann dabei eine Unterbrechung des Transportbandes, insbesondere eine Öffnung des Transportbandes, zur Folge haben. Da eine solche fehlerhafte Anordnung eines Trittelementes ein Gefahrenpotential sowohl für den fehlerfreien Weiterbetrieb der Personenfördervorrichtung als auch für die Nutzer der Personenfördervorrichtung darstellt, ist eine frühzeitige Erkennung einer solchen fehlerhaften Anordnung von Wichtigkeit.

Zur Erkennung einer fehlerhaften Anordnung eines Trittelementes ist bekannt, Überwachungseinrichtungen einzusetzen. Wird mittels der Überwachungseinrichtung beispielsweise ein Bruch eines Trittelementes erkannt, kann die Personenfördervorrichtung außer Betrieb genommen werden.

Aus der WO 2015/102031 A1 ist eine Überwachungseinrichtung bekannt, mittels der eine fehlende Fahrtreppenstufe im Rücklaufbereich einer Fahrtreppe erkannt werden kann. Ein Erkennungselement wird dabei von den Schlepprollen der Fahrtreppenstufen einer Fahrtreppe in einer waagerechten Position gehalten, wobei das Erkennungselement von den Schlepprollen der Fahrtreppenstufen gestützt wird. Fehlt eine Fahrtreppenstufe, so kann das Erkennungselement nicht mehr gestützt werden. Es wird dabei aus dessen waagerechten Position ausgelenkt und betätigt dabei einen Taster.

Weiter ist beispielsweise aus der Druckschrift JP 08169679 A eine Überwachungseinrichtung zur Erkennung von Stufenbrüchen bei Fahrtreppen bekannt. Hierbei werden Bilder der Stufen fototechnisch erfasst. Die erfassten Bilder werden einem Vergleich mit Bildern von fehlerfreien Stufen unterzogen, um einen Fehler zu detektieren. Diese Überwachung ist dabei technisch aufwendig zu realisieren und somit kostenintensiv. Darüber hinaus ist bei Verunreinigung der Kameralinse eine korrekte Überwachung nicht mehr gegeben.

Ferner ist aus der DE 42 19 073 A1 eine Überwachungseinrichtung für ein Fördermittel, insbesondere für eine Fahrteppe, mit einem an Ketten geführten geneigten Stufenband mit endlos umlaufenden Stufen bekannt. Die Überwachungseinrichtung umfasst dabei eine Lichtschranke, wobei der Lichtstrahl der Lichtschranke mit engem Abstand unterhalb der Stufen der Stufenbahn verläuft und parallel zur Bewegungsrichtung der Stufenbahn gerichtet ist. Sobald eine Unterbrechung des Lichtstrahls durch Absenken einer Stufe erfolgt, wird der Antrieb der Stufenbahn abgeschaltet. Ein Nachteil der vorgeschlagenen Überwachungseinrichtung besteht darin, dass eine Unterbrechung des Lichtstrahls nicht selten aus anderen Gründen, als einem Absenken einer Stufe erfolgen kann. Insbesondere kann eine Unterbrechung des Lichtstrahls durch eindringende Fremdkörper, wie Laub oder Abfall, oder auch durch Staub oder Kleintiere, wie Insekten, hervorgerufen werden. Eine korrekte Überwachung ist dann nicht mehr gegeben.

Vor diesem Hintergrund ist es eine Aufgabe der vorliegenden Erfindung eine eingangs genannte Personenfördervorrichtung zu verbessern, insbesondere dahingehend, dass eine fehlerhafte Anordnung eines Trittelements, wie insbesondere eine abgesenkte Stufe, zuverlässiger erkannt wird. Die Erkennung einer fehlerhaften Anordnung soll dabei vorteilhafterweise zudem kostengünstig realisierbar sein.

Zur Lösung dieser Aufgabe wird eine Personenfördervorrichtung gemäß Anspruch 1 vorgeschlagen. Weitere vorteilhafte Ausgestaltungen der Erfindung sind in den abhängigen Ansprüchen und der Beschreibung beschrieben.

Die vorgeschlagene Lösung sieht eine Personenfördervorrichtung, insbesondere eine Fahrtreppe oder einen Fahrsteig, vor, welche eine Mehrzahl von zu einem endlosen Transportband verbundenen Trittelementen, wenigstens eine Antriebseinheit zum Antreiben des Transportbandes und eine Überwachungseinrichtung zur Erkennung einer fehlerhaften Anordnung wenigstens eines Trittelementes im Transportband umfasst, wobei die Trittelemente des angetriebenen Transportbandes zwischen einer ersten Umkehrstation und einer zweiten Umkehrstation einen Transportbereich und einen Rücklaufbereich durchlaufen. Die Überwachungseinrichtung weist dabei wenigstens ein Detektionsmittel und wenigstens eine Auslöseeinheit auf, wobei das wenigstens eine Detektionsmittel unterhalb der Trittelemente des Transportbereichs in Längserstreckungsrichtung der Personenfördervorrichtung zwischen der ersten Umkehrstation und der zweiten Umkehrstation angeordnet ist. Das wenigstens eine Detektionsmittel ist mit der wenigstens einen Auslöseeinheit verbunden, wobei die wenigstens eine Auslöseeinheit ausgebildet ist, bei einem mechanischen Einwirken auf das wenigstens eine Detektionsmittel auszulösen.

Da eine fehlerhafte Anordnung eines Trittelementes durch ein Absenken dieses Trittelementes verursacht wird, tangiert ein fehlerhaft angeordnetes Trittelement das Detektionsmittel. Es erfolgt somit ein detektierbares mechanisches Einwirken auf das Detektionsmittel. Das mechanische Einwirken auf das wenigstens eine Detektionsmittel führt dabei insbesondere zu einer Verformung beziehungsweise zu einer Auslenkung des Detektionsmittels. Da das Detektionsmittel mit wenigstens einer Auslöseeinheit verbunden ist, das Detektionsmittel also mit der Auslöseeinheit in Wirkverbindung steht, wird die Auslöseeinheit vorteilhafterweise durch das mechanische Einwirken, insbesondere die Verformung beziehungsweise die Auslenkung des Detektionsmittels, ausgelöst. Durch die mechanische Einwirkung auf das Detektionsmittel wird somit vorteilhafterweise eine fehlerhafte Anordnung eines Trittelementes erkannt. Dabei ist insbesondere vorgesehen, dass durch das mechanische Einwirken auf das Detektionsmittel ein Signal generiert wird, welches die Auslöseeinheit empfängt und zum Auslösen veranlasst. Das Signal, welches durch die mechanische Einwirkung auf das Detektionsmittel generiert wird, kann dabei insbesondere ein mechanisches oder ein elektrisches Signal sein.

Vorteilhafterweise ist die vorgeschlagene Lösung dabei kostengünstig realisierbar und weist zudem eine geringe Störanfälligkeit gegen Verunreinigungen oder in die Personenfördervorrichtung eindringende Fremdkörper auf. So sind beispielsweise Laub oder Kleintiere zu leicht, um das Detektionsmittel zu verformen oder auszulenken. Insofern erfolgt insbesondere durch eindringendes Laub, Verunreinigungen oder Kleintiere keine mechanische Einwirkung auf das Detektionsmittel, die zum Auslösen der Auslöseeinheit führen würde.

Zudem ist die vorgeschlagene Lösung vorteilhafterweise alterungsrobust, da diese nicht, wie eine Lichtschranke oder eine fotobasierte Detektion, durch Staub oder sonstige Verunreinigungen in deren Funktion beeinträchtigt wird. Somit ist mit der vorgeschlagenen Lösung vorteilhafterweise auch über einen langen Zeitraum eine korrekte Überwachung einer fehlerhaften Anordnung eines Trittelementes ermöglicht.

Eine vorteilhafte Ausgestaltung der vorgeschlagenen Personenfördervorrichtung sieht vor, dass das Detektionsmittel mittig zu den Trittelementen zwischen der ersten Umkehrstation und der zweiten Umkehrstation angeordnet ist. Insbesondere ist vorgesehen, dass das Detektionsmittel symmetrisch bezüglich der Mitte der Trittelemente in Längserstreckungsrichtung der Personenfördervorrichtung zwischen der ersten Umkehrstation und der zweiten Umkehrstation angeordnet ist. Durch die mittige beziehungsweise symmetrische Anordnung des Detektionsmittels ist vorteilhafterweise eine besonders gute Erkennbarkeit einer fehlerhaften Anordnung eines Trittelementes ermöglicht.

Hinsichtlich der Ausgestaltung des wenigstens einen Detektionsmittels können verschiedene Varianten vorgesehen werden. Entscheidend ist, dass bei einem mechanischen Einwirken auf das wenigstens eine Detektionsmittel, welches insbesondere ein Verformen oder ein Auslenken des Detektionsmittels bewirkt, die Auslöseeinheit auslöst.

Eine vorteilhafte Ausgestaltung der vorgeschlagenen Lösung sieht vor, dass das wenigstens eine Detektionsmittel unter Zugspannung unterhalb der Trittelemente des Transportbereichs zwischen der ersten Umkehrstation und der zweiten Umkehrstation angeordnet ist, wobei die wenigstens eine Auslöseeinheit ausgebildet ist, bei Auslenkung des wenigstens einen Detektionsmittels durch ein mechanisches Einwirken auf das wenigstens eine Detektionsmittel auszulösen.

Das Detektionsmittel ist dabei also zwischen der ersten Umkehrstation und der zweiten Umkehrstation in Längserstreckungsrichtung der Personenfördervorrichtung mechanisch gespannt. Das Detektionsmittel kann dabei zwischen der ersten Umkehrstation und der zweiten Umkehrstation lediglich unter einem Abschnitt des Transportbereichs in Längserstreckungsrichtung der Personenfördervorrichtung angeordnet sein. Bevorzugt ist das Detektionsmittel aber unterhalb des gesamten Transportbereichs in Längserstreckungsrichtung der Personenfördervorrichtung gespannt. Dadurch wird eine fehlerhafte Anordnung eines Trittelementes vorteilhafterweise über den gesamten Transportbereich erkannt. Für eine besonders gute Erkennung einer fehlerhaften Anordnung eines Trittelementes im Transportband ist das Detektionsmittel vorzugsweise wenige Zentimeter unterhalb der Trittelemente des Transportbereichs gespannt.

Bei einer solchen Ausgestaltung wird die Auslöseeinheit vorteilhafterweise durch eine Auslenkung des Detektionsmittels beziehungsweise durch die Erhöhung der Zugspannung des gespannten Detektionsmittels ausgelöst. Über die Auslenkung des Detektionsmittels wird somit vorteilhafterweise eine fehlerhafte Anordnung eines Trittelementes erkannt.

Ist die Personenfördervorrichtung eine Fahrtreppe, so ist die erste Umkehrstation üblicherweise auf einer ersten Stockwerksebene angeordnet und die zweite Umkehrstation auf einer zweiten Stockwerksebene, wobei die zweite Stockwerksebene bezüglich der ersten Stockwerksebene höher oder niedriger gelegen ist. Die Personenfördervorrichtung weist in diesem Fall also eine obere Umkehrstation und eine untere Umkehrstation auf. Insbesondere ist dabei vorgesehen, dass zum Antreiben des Stufenbandes der Fahrtreppe die obere Umkehrstation über ein Getriebe mit der Antriebseinheit verbunden ist.

Ist die Personenfördervorrichtung ein Fahrtsteig, sind insbesondere eine vordere Umkehrstation und eine hintere Umkehrstation als erste Umkehrstation und zweite Umkehrstation vorgesehen.

Gemäß einer weiteren vorteilhaften Ausgestaltung der Erfindung ist vorgesehen, dass das Detektionsmittel zwischen wenigstens einem Halteelement und der wenigstens einen Auslöseeinheit gespannt ist. Das wenigstens eine Haltelement und die wenigstens eine Auslöseeinheit sind dabei zwischen der ersten Umkehrstation und der zweiten Umkehrstation angeordnet. Somit ist also auch das Detektionsmittel zwischen der ersten Umkehrstation und der zweiten Umkehrstation angeordnet. Als Halteelement kann beispielsweise ein Haken oder eine Öse vorgesehen sein. Das Halteelement ist dabei vorzugsweise metallisch ausgebildet.

Eine vorteilhafte Weiterbildung dieser Ausgestaltung sieht vor, dass die Personenfördervorrichtung ein erstes Höhenniveau mit einem zweiten Höhenniveau verbindet, wobei das zweite Höhenniveau höhergelegen ist als das erste Höhenniveau, wobei die wenigstens eine Auslöseeinheit im Bereich des zweiten Höhenniveaus angeordnet ist. Das wenigstens eine Haltelement ist somit im Bereich des ersten Höhenniveaus angeordnet. Es hat sich gezeigt, dass bei einer derartigen Anordnung eine besonders gute Erkennbarkeit von fehlerhaft angeordneten Trittelementen gegeben ist.

Eine vorteilhafte Ausgestaltungsvariante der Erfindung sieht vor, dass die Überwachungseinrichtung der Personenfördervorrichtung wenigstens eine erste Auslöseeinheit und wenigstens eine zweite Auslöseeinheit aufweist, wobei das Detektionsmittel zwischen der wenigstens einen ersten Auslöseeinheit und der wenigstens einen zweiten Auslöseeinheit gespannt ist. Vorteilhafterweise verbessert diese Ausgestaltungsvariante weiter die Erkennbarkeit von fehlerhaft angeordneten Trittelementen.

Gemäß einer vorteilhaften Ausgestaltungsvariante ist vorgesehen, dass das wenigstens eine Detektionsmittel wenigstens ein mechanisch gespanntes Seil, insbesondere ein Stahlseil, umfasst beziehungsweise als mechanisch gespanntes Seil ausgebildet ist, wobei das wenigstens eine mechanisch gespannte Seil bei mechanischer Einwirkung ausgelenkt wird und bei einer vorbestimmten Auslenkung die wenigstens eine Auslöseeinheit auslöst. Vorteilhafterweise ist das wenigstens eine Detektionsmittel unterhalb der Trittelemente des Transportbereichs zwischen der ersten Umkehrstation und der zweiten Umkehrstation unter Zugspannung angeordnet, wobei das Detektionsmittel vorteilhafterweise als Seil, insbesondere als Stahlseil angeordnet ist. Die wenigstens eine Auslöseeinheit ist dabei vorteilhafterweise ausgebildet, bei Auslenkung des Detektionsmittels durch mechanische Einwirkung eines fehlerhaft angeordneten Trittelementes auf das Detektionsmittel auszulösen. Bei einer Ausgestaltung des wenigstens einen Detektionsmittels als gespanntes Seil, beispielsweise als gespanntes Stahlseil, bewirkt die mechanische Einwirkung auf das Seil eine Erhöhung der Zugspannung des Seils, wodurch vorteilhafterweise eine Auslöseeinheit zur Auslösung gebracht wird. Das wenigstens eine Seil kann dabei geführt sein, vorteilhafterweise über Umlenkrollen oder durch einen entsprechend ausgestalteten Aufnahmeraum.

Eine besonders kostengünstige Ausgestaltung der Erfindung sieht vor, dass das Detektionsmittel aus wenigstens einem Seil gebildet ist. Insbesondere ist vorgesehen, dass das Detektionsmittel ein Seil ist, welches unterhalb der Trittelemente zwischen der ersten Umkehrstation und der zweiten Umkehrstation unter Zugspannung angeordnet ist, also insbesondere zwischen einem Halteelement und einer Auslöseeinheit oder zwischen zwei Auslöseeinheiten mechanisch gespannt ist. Ausgestaltungen der Erfindung mit mehreren nebeneinander gespannten Seilen als Detektionsmittel weisen dabei vorteilhafterweise eine weiter verbesserte Erkennbarkeit von fehlerhaft angeordneten Trittelementen auf. Dabei sind sowohl Ausgestaltungen vorgesehen, bei dem jedes Seil jeweils mit wenigstens einer Auslöseeinheit verbunden ist, als auch Ausgestaltungen bei denen mehrere Seile oder sämtliche Seile mit einer Auslöseeinheit verbunden sind.

Bei einer weiteren vorteilhaften Ausgestaltung ist das Detektionsmittel aus einem Netz gebildet. Insbesondere ist vorgesehen, dass das Detektionsmittel ein zwischen wenigstens einer Auslöseeinheit und einem Haltelement oder ein zwischen wenigstens zwei Auslöseeinheiten gespanntes Netz ist. Hierdurch ist grundsätzlich die Erkennbarkeit eines fehlerhaft angeordneten Trittelementes noch weiter verbessert. Insbesondere lassen sich hierdurch weitere Defekte erkennen, beispielsweise wenn während des Betriebs der Fahrtreppe ein Teil eines Trittelementes abbricht und auf das Detektionsmittel fällt. Vorteilhafterweise können darüber hinaus in die Personenfördervorrichtung eingedrungene Fremdkörper, wie Laubblätter, Flugblätter oder Kleinteile von dem Detektionsmittel aufgefangen werden und gelangen somit vorteilhafterweise nicht in die Mechanik der Personenfördervorrichtung. Da derartige Fremdkörper wesentlich leichter sind, als ein Trittelement der Personenfördervorrichtung, ist wenigstens eine Auslöseeinheit vorteilhafterweise derart konfigurierbar, dass diese nur dann auslöst, wenn ein Trittelement absinkt oder bricht und in Folge dessen auf das Detektionsmittel auftrifft und dieses auslenkt.

Insbesondere bei erfindungsgemäßen Ausgestaltungen, die vorsehen, dass das Detektionsmittel aus wenigstens einem Seil oder aus wenigstens einem Netz gebildet ist, ist vorteilhafterweise vorgesehen, dass das Detektionsmittel wenigstens ein Stahlseil umfasst. Hierdurch ist das Detektionsmittel vorteilhafterweise besonders robust und langlebig ausgebildet.

Bei einer weiteren vorteilhaften Ausgestaltung der erfindungsgemäßen Personenfördervorrichtung ist vorgesehen, dass die Personenfördervorrichtung ein Ausgleichsmittel aufweist, welches ausgebildet ist, ein Nachlassen der Zugspannung des gespannten Detektionsmittels auszugleichen. Das Ausgleichsmittel kann dabei beispielsweise Federelemente umfassen, die für eine gleichbleibende Zugspannung auch über längere Zeiträume sorgen. Alternativ oder zusätzlich können Stellschrauben vorgesehen werden, die insbesondere bei turnusgemäßen Wartungsarbeiten bei Bedarf nachjustiert werden können, um einem Nachlassen der Zugspannung entgegenzuwirken. Vorteilhafterweise ist die wenigstens eine Auslöseeinheit ausgebildet, ein Nachlassen der Zugspannung zu detektieren und zu signalisieren. Eine weitere vorteilhafte Ausgestaltung sieht vor, dass die Auslöseeinheit einen in Abhängigkeit von vorgegebenen Parametern, wie Temperatur oder zeitliche Dauer, bestimmten Korrekturfaktor ermittelt, der eine mit diesen Parametern verbundene Veränderung der Zugspannung vorteilhafterweise Rechnung trägt. Fehlerkennungen von fehlerhaft angeordneten Trittelementen werden hierdurch vorteilhafterweise noch weiter reduziert.

Gemäß einer weiteren vorteilhaften Ausgestaltung der Erfindung ist die wenigstens eine Auslöseeinheit der Überwachungseinrichtung ausgebildet, bei einem Nachlassen der Zugspannung des Detektionsmittels, insbesondere bei einem Reißen des Detektionsmittels, auszulösen. Als Ausgestaltungsvariante hierzu ist vorgesehen, dass die Überwachungseinrichtung der Personenfördervorrichtung eine weitere, also eine zusätzliche Auslöseeinheit umfasst, welche ausgebildet ist, bei einem Nachlassen der Zugspannung des Detektionsmittels und somit insbesondere bei einem Reißen des Detektionsmittels, auszulösen. Sollte das Detektionsmittel, insbesondere wenn dieses als Seil ausgebildet ist, durch ein gebrochenes Trittelement durchtrennt werden, ist somit vorteilhafterweise eine zusätzliche Sicherung bereitgestellt, um eine fehlerhafte Anordnung eines Trittelementes zu erkennen. Darüber hinaus ist hierdurch vorteilhafterweise auch der unwahrscheinlich Fall erkennbar, dass das Detektionsmittel nachgespannt werden muss. Insgesamt wird somit die Zuverlässigkeit der Erkennung eines fehlerhaft angeordneten Trittelementes noch weiter erhöht.

Eine weitere vorteilhafte Ausgestaltung der erfindungsgemäßen Personenfördervorrichtung sieht vor, dass das Transportband der Personenfördervorrichtung in dem Transportbereich in wenigstens zwei unterschiedlichen Ebenen verläuft, wobei die Personenfördervorrichtung Umlenkmittel aufweist, über welche das Detektionsmittel geführt ist, sodass in den unterschiedlichen Ebenen ein einheitlicher Abstand zwischen Trittelementen und Detektionsmittel eingehalten ist. Hierdurch ist vorteilhafterweise auch bei gebogenen oder kaskadenartig ausgebildeten Personenfördervorrichtungen, insbesondere Fahrtreppen, eine zuverlässige und gleichbleibende Erkennung einer fehlerhaften Anordnung wenigstens eines Trittelementes über den gesamten Transportbereich ermöglicht. Ist das Detektionsmittel als Seil ausgebildet, kann das Umlenkmittel insbesondere eine Rolle sein, über welches das Seil geführt ist. Umfasst das Detektionsmittel mehrere Seile sind entsprechend mehrere Rollen vorzusehen. Insbesondere kann das wenigstens eine Seil als Detektionsmittel auch in einem in Längserstreckungsrichtung eines nachfolgend noch beschriebenen Dämpfungselementes ausgebildeten Aufnahmeraum geführt sein.

Vorteilhafterweise ist die wenigstens eine Auslöseeinheit der erfindungsgemäßen Personenfördervorrichtung ein Mikroschalter oder ein Zugsensor, insbesondere dann, wenn das Detektionsmittel wenigstens ein Seil umfasst oder aus wenigstens einem Seil gebildet ist. Ein Mikroschalter ist dabei ein elektrischer Schalter, insbesondere ein Endlagenschalter. Sind dessen Kontakte geöffnet, im vorliegenden Fall, wenn das Detektionsmittel durch ein Absinken eines Trittelementes ausgelenkt ist, so weisen die Kontakte üblicherweise einen Abstand von weniger als 3 mm zueinander auf. Vorteile von Mikroschaltern oder Zugsensoren als Auslöseeinheiten sind insbesondere der robuste Aufbau, der eine hohe Zuverlässigkeit mit sich bringt, sowie der niedrige Preis. Als weitere vorteilhafte Ausgestaltung ist vorgesehen, dass die wenigstens eine Auslöseeinheit eine Steuereinrichtung ist, insbesondere ein entsprechend eingerichteter Mikrocontroller.

Eine weitere vorteilhafte Ausgestaltungsvariante sieht vor, dass das wenigstens eine Detektionsmittel einen kapazitiven Näherungssensor umfasst, dessen Kapazität sich bei mechanischer Einwirkung auf das Detektionsmittel ändert, wobei bei einer vorbestimmten Kapazitätsänderung die wenigstens eine Auslöseeinheit auslöst.

Gemäß einer weiteren vorteilhaften Ausgestaltung umfasst das wenigstens eine Detektionsmittel einen induktiven Näherungssensor, dessen Induktivität sich bei mechanischer Einwirkung auf das Detektionsmittel ändert, wobei bei einer vorbestimmten Induktivitätsänderung die wenigstens eine Auslöseeinheit auslöst.

Ferner ist als weitere vorteilhafte Ausgestaltungsvariante vorgesehen, dass das wenigstens eine Detektionsmittel einen Widerstandssensor umfasst, dessen Widerstand sich bei mechanischer Einwirkung auf das Detektionsmittel ändert, wobei bei einer vorbestimmten Widerstandsänderung die wenigstens eine Auslöseeinheit auslöst.

Bei einer weiteren vorteilhaften Ausgestaltungsvariante ist vorgesehen, dass das wenigstens eine Detektionsmittel einen optischen Sensor umfassend einen elastisch verformbaren Lichtleiter umfasst, dessen Messwerte sich bei mechanischer Einwirkung auf den Lichtleiter ändern, wobei bei einer vorbestimmten Messwertänderung die wenigstens eine Auslöseeinheit auslöst.

Bei einer weiteren vorteilhaften Ausgestaltungsalternative umfasst das wenigstens eine Detektionsmittel einen Strömungssensor umfassend einen fluiddurchströmten elastisch verformbaren Schlauch, dessen Strömungsmesswerte sich bei mechanischer Einwirkung auf den Schlauch ändern, wobei bei einer vorbestimmten Änderung der Strömungsmesswerte die wenigstens eine Auslöseeinheit auslöst. Der Schlauch erstreckt sich hierbei vorteilhafterweise unterhalb der Trittelemente des Transportbereichs zwischen der ersten Umkehrstation und der zweiten Umkehrstation in Längserstreckungsrichtung der Personenfördervorrichtung und wird von einem geeigneten Medium durchströmt. Eine Änderung der Strömung, die durch die durch die mechanische Einwirkung eines absinkenden Trittelementes hervorgerufene Verformung des elastischen Schlauches verursacht wird, wird dabei vorteilhafterweise erfasst und bewirkt vorteilhafterweise somit eine Auslösung der Auslöseeinheit.

Eine weitere besonders vorteilhafte Ausgestaltungsvariante sieht vor, dass das wenigstens eine Detektionsmittel wenigstens einen Beschleunigungssensor umfasst, insbesondere einen auf einem Schwingungsüberträger angeordneten Beschleunigungssensor umfasst, dessen Beschleunigungsmesswerte sich bei mechanischer Einwirkung auf den Schwingungsüberträger ändern, wobei bei einer vorbestimmten Änderung der Beschleunigungsmesswerte die wenigstens eine Auslöseeinheit auslöst. Diese Ausgestaltung ist vorteilhafterweise besonders kostengünstig. Als Schwingungsüberträger ist insbesondere ein Metallprofil und/oder ein Dämpfungselement vorgesehen. Vorteilhafterweise ist der Schwingungsüberträger ein auf ein Metallprofil aufgebrachtes Dämpfungselement. Das Absinken eines Trittelementes auf den Schwingungsüberträger erzeugt dabei Schwingungen die vorteilhafterweise als Änderung der Beschleunigungsmesswerte von dem wenigstens einen Beschleunigungssensor erfasst werden und somit ein Auslösen der Auslöseeinheit bewirken.

Das Detektionsmittel kann gemäß einer Ausgestaltungsvariante der Erfindung zwischen der ersten Umkehrstation und der zweiten Umkehrstation lediglich unter einem Abschnitt des Transportbereichs in Längserstreckungsrichtung der Personenfördervorrichtung angeordnet sein. Bevorzugt ist das Detektionsmittel aber unterhalb des gesamten Transportbereichs in Längserstreckungsrichtung der Personenfördervorrichtung angeordnet. Dadurch wird eine fehlerhafte Anordnung eines Trittelementes vorteilhafterweise über den gesamten Transportbereich erkannt. Eine Anordnung des wenigstens einen Detektionsmittels unterhalb des Transportbereichs bedeutet insbesondere, dass das wenigstens eine Detektionsmittel zwischen Transportbereich und Rücklaufbereich angeordnet ist, also unterhalb der Trittelemente des Transportbereichs aber oberhalb der Trittelemente des Rücklaufbereichs.

Für eine besonders gute Erkennung einer fehlerhaften Anordnung eines Trittelementes im Transportband ist das Detektionsmittel vorzugsweise wenige Zentimeter unterhalb der Trittelemente des Transportbereichs angeordnet. Ferner ist gemäß einer weiteren vorteilhaften Ausgestaltung vorgesehen, dass das wenigstens eine Detektionsmittel äquidistant unterhalb der Trittelemente des Transportbereichs zwischen der ersten Umkehrstation und der zweiten Umkehrstation angeordnet ist. Hierdurch wird vorteilhafterweise über den gesamten Detektionsbereich eine fehlerhafte Anordnung eines Trittelementes in gleichem Maße erkannt. Hierdurch ist vorteilhafterweise auch bei gebogenen oder kaskadenartig ausgebildeten Personenfördervorrichtungen, insbesondere Fahrtreppen, eine zuverlässige und gleichbleibende Erkennung einer fehlerhaften Anordnung wenigstens eines Trittelementes über den gesamten Transportbereich ermöglicht. Ist das Detektionsmittel als Seil ausgebildet, sind zur Einhaltung des gleichbleibenden Abstandes vorteilhafterweise Umlenkmittel, wie insbesondere eine Führung oder Rollen, vorgesehen, über welche das Seil geführt ist. Umfasst das Detektionsmittel mehrere Seile sind entsprechend mehrere Umlenkmittel vorzusehen.

Insbesondere ist gemäß einer vorteilhaften Ausgestaltung der vorgeschlagenen Personenfördervorrichtung vorgesehen, dass die Überwachungseinrichtung der Personenfördervorrichtung genau ein Detektionsmittel und genau eine Auslöseeinheit aufweist.

Eine weitere besonders vorteilhafte Ausgestaltung der erfindungsgemäßen Personenfördervorrichtung sieht vor, dass das Detektionsmittel an wenigstens einem Dämpfungselement angeordnet ist oder innerhalb wenigstens eines Dämpfungselementes angeordnet ist. Insbesondere ist vorgesehen, dass das wenigstens eine Detektionsmittel innerhalb des Dämpfungselementes geführt ist, vorzugsweise in einem dafür vorgesehenen Aufnahmeraum. Das wenigstens eine Dämpfungselement ist vorteilhafterweise unterhalb der Trittelemente des Transportbereichs zwischen der ersten Umkehrstation und der zweiten Umkehrstation angeordnet. Besonders bevorzugt ist das wenigstens eine Dämpfungselement unterhalb des gesamten Transportbereichs angeordnet. Insbesondere kann das Dämpfungselement schlauchartig ausgebildet sein.

Vorteilhafterweise umfasst das wenigstens eine Dämpfungselement zumindest einen sich über die Längserstreckung des Dämpfungselementes erstreckenden Dämpfungsteil aus einem elastisch verformbaren Material, insbesondere aus einem elastisch verformbaren Kunststoff. Insbesondere ist als vorteilhafte Ausgestaltung vorgesehen, dass das Dämpfungsteil das Dämpfungselement ist, das Dämpfungselement also ein elastisch verformbares Material ist, insbesondere ein elastisch verformbarer Kunststoff.

Gemäß einer weiteren vorteilhaften Ausgestaltung ist vorgesehen, dass das wenigstens eine Dämpfungsteil wenigstens zwei seitliche Stützwandungen aufweist, zwischen denen in Längserstreckungsrichtung des Dämpfungselementes ein Stauchraum ausgebildet ist, welcher bei mechanischer Einwirkung durch ein absinkendes Trittelement zusammengestaucht wird. Insbesondere kann der Stauchraum dabei ein Hohlraum sein. Alternativ kann der Stauchraum mit einem nachgiebigen Material, beispielsweise einem Schaum verfüllt sein. Vorteilhafterweise wird durch den Stauchraum ein stärkeres Zusammenstauchen des Dämpfungselementes beim Absinken eines Trittelementes ermöglicht, sodass einerseits das abgesunkene Trittelement besser gedämpft wird. Vorteilhafterweise lässt sich darüber hinaus das Erkennen einer fehlerhaften Anordnung eines Trittelementes besser erkennen, da der Weg des Zusammenstauchens, also die Distanz zwischen der oberen Position des Dämpfungselements ohne mechanische Einwirkung und der oberen Position des Dämpfungselements bei mechanischer Einwirkung, insbesondere bei aufliegendem Trittelement, vergrößert ist. Vorteilhafterweise ist das wenigstens eine Detektionsmittel dabei oberhalb des Stauchraums an oder innerhalb des Dämpfungselementes angeordnet.

Bei einer weiteren vorteilhaften Ausgestaltung der vorgeschlagenen Personenfördervorrichtung ist das wenigstens eine Dämpfungselement an wenigstens einem Trägerelement angeordnet, insbesondere auf wenigstens einem Trägerelement. Hierdurch kann das wenigstens eine Dämpfungselement vorteilhafterweise besonders gut dem Verlauf des Transportbandes der Personenfördervorrichtung nachgeführt werden, insbesondere so, dass ein geringer äquidistanter Abstand zwischen Trittelementen des Transportbereichs und Dämpfungselement realisiert ist.

Eine vorteilhafte Weiterbildung dieser Ausgestaltung nutzt aus, dass eine eingangs genannte Personenfördervorrichtung üblicherweise wenigstens eine Tragkonstruktion aufweist, insbesondere eine Tragkonstruktion mit einer Fachwerkstruktur, innerhalb derer das Transportband der Personenfördervorrichtung geführt ist. Dabei ist vorteilhafterweise das wenigstens eine Trägerelement mit der wenigstens einen Tragkonstruktion verbunden. Insbesondere ist dabei vorgesehen, dass das wenigstens eine Trägerelement an quer beziehungsweise vertikal zur Längserstreckungsrichtung der Personenfördervorrichtung angeordneten Querstreben der Tragkonstruktion angeordnet ist.

Vorteilhafterweise ist das wenigstens eine Trägerelement ein an der Tragkonstruktion angeordnetes Metallprofil, auf dem das wenigstens eine Dämpfungselement angeordnet ist. Das Metallprofil kann dabei insbesondere ein Stahlträger oder eine Stahlschiene sein. Insbesondere ist als eine vorteilhafte Ausgestaltung vorgesehen, dass das Metallprofil eine Metallschiene ist, wobei die Metallschiene mit dem Dämpfungselement vorteilhafterweise formschlüssig, insbesondere mittels einer Nut-Feder-Verbindung, verbunden ist. Vorzugsweise ist die Nut eine T-Nut. Das Dämpfungselement erstreckt sich vorteilhafterweise über die gesamte Länge des Trägerelements.

Bei einer weiteren besonders vorteilhaften Ausgestaltung der vorgeschlagenen Personenfördervorrichtung ist unterhalb der Trittelemente des Transportbereichs zwischen der ersten Umkehrstation und der zweiten Umkehrstation in Längserstreckungsrichtung der Personenfördervorrichtung ein Stützelement als Trägerelement angeordnet. Das Stützelement ist vorteilhafterweise ausgebildet, im Wesentlichen deformationsfrei ein aus dem Transportbereich absinkendes Trittelement zu stützen und somit ein weiteres Absinken des Trittelementes zu verhindern, insbesondere auch dann, wenn das Trittelement belastet ist, also beispielsweiser ein Nutzer der Personenfördervorrichtung auf dem Trittelement steht. Parallel zu dem Stützelement kann wenigstens ein weiteres Stützelement vorgesehen werden, um die Stützwirkung weiter zu verbessern.

Eine weitere vorteilhafte Ausgestaltung der vorgeschlagenen Personenfördervorrichtung sieht vor, dass das wenigstens eine Dämpfungselement Bestandteil des wenigstens einen Detektionselementes ist. Insbesondere ist als vorteilhafte Ausgestaltung vorgesehen, dass ein oder mehrere Beschleunigungssensoren auf dem Dämpfungselement angeordnet sind. Hierbei wird das Absinken eines Trittelementes auf das Dämpfungselement durch den wenigstens einen Beschleunigungssensor detektiert, sodass die Auslöseeinheit auslösen kann.

Unabhängig davon, wie die die Auslöseeinheit zur Auslösung gebracht wird, ist insbesondere vorgesehen, dass das Auslösen der wenigstens einen Auslöseeinheit ein Anhalten des Transportbandes auslöst.

Wenn also beispielsweise eine Stufe bei einer Fahrtreppe absinkt beziehungsweise bricht und in Folge dessen mechanisch auf das Detektionsmittel einwirkt, so wird die mechanische Einwirkung erkannt, beispielsweise durch Verformung oder Auslenkung des Detektionsmittels, und die Auslöseeinrichtung löst aus. Auf diese Weise wird erkannt, dass wenigstens eine Stufe der Fahrtreppe fehlerhaft angeordnet ist. Als weitere Konsequenz wird vorteilhafterweise durch die Auslöseeinheit ein Anhalten der Fahrtreppe ausgelöst, das heißt der Betrieb der Fahrtreppe wird gestoppt.

Insbesondere ist vorgesehen, dass das Auslösen der wenigstens einen Auslöseeinheit einen Stopp der wenigstens einen Antriebseinheit und/oder ein Betätigen wenigstens einer Bremse der Personenfördervorrichtung auslöst. Ein Stopp der wenigstens einen Antriebseinheit kann beispielsweise derart erfolgen, dass die Stromversorgung der Antriebseinheit der Personenfördervorrichtung in Reaktion auf ein Auslösen der Auslöseeinheit unterbrochen wird, beispielsweise indem wenigstens ein hierfür vorgesehenes Schaltschütz ausgelöst wird. Insbesondere zusätzlich zum Stoppen der Antriebseinheit kann vorgesehen sein, dass wenigstens eine Bremse der Personenfördervorrichtung durch die Auslöseeinheit ausgelöst wird. Hierdurch wird insbesondere bei Fahrtreppen verhindert, dass das Stufenband durch auf den Stufen befindliche Personen weiter bewegt wird. Insbesondere ist ferner vorgesehen, dass das Anhalten des Transportbandes nicht abrupt erfolgt, sondern verzögert zum Stillstand gebracht wird, um Stürze von Personen auf dem Transportband zu verhindern. Insbesondere kann auch die Antriebseinheit durch entsprechende Ansteuerung als Bremse eingesetzt werden.

Weitere vorteilhafte Einzelheiten, Merkmale und Ausgestaltungsdetails der Erfindung werden im Zusammenhang mit den in den Figuren dargestellten Ausführungsbeispielen näher erläutert. Dabei zeigt:
- Fig. 1: in einer vereinfachten schematischen Darstellung ein Ausführungsbeispiel für eine erfindungsgemäß ausgebildete Personenfördervorrichtung;
- Fig. 2: in einer vereinfachten schematischen Darstellung ein weiteres Ausführungsbeispiel für eine erfindungsgemäß ausgebildete Personenfördervorrichtung;
- Fig. 3: in einer vereinfachten schematischen Darstellung einen Ausschnitt eines weiteren Ausführungsbeispiels für eine erfindungsgemäß ausgebildete Personenfördervorrichtung;
- Fig. 4: in einer vereinfachten schematischen Darstellung ein Ausführungsbeispiel für eine Anordnung eines Dämpfungselements zur erfindungsgemäßen Ausbildung einer Personenfördervorrichtung;
- Fig. 5: in einer vereinfachten schematischen Darstellung einen Ausschnitt eines weiteren Ausführungsbeispiels für eine erfindungsgemäß ausgebildete Personenfördervorrichtung;
- Fig. 6: Ausführungsbeispiele von einer Anordnung von Detektionsmitteln in Ausführungsbeispielen von Dämpfungselementen zur erfindungsgemäßen Ausbildung einer Personenfördervorrichtung;
- Fig. 7: in einer vereinfachten schematischen Darstellung ein weiteres Ausführungsbeispiel für eine erfindungsgemäß ausgebildete Personenfördervorrichtung;
- Fig. 8: in einer vereinfachten schematischen Darstellung ein weiteres Ausführungsbeispiel für eine erfindungsgemäß ausgebildete Personenfördervorrichtung;
- Fig. 9: in einer vereinfachten schematischen Darstellung ein weiteres Ausführungsbeispiel für eine erfindungsgemäß ausgebildete Personenfördervorrichtung;
- Fig. 10: in einer vereinfachten schematischen Darstellung ein weiteres Ausführungsbeispiel für eine erfindungsgemäß ausgebildete Personenfördervorrichtung; und
- Fig. 11: in einer vereinfachten schematischen Darstellung ein weiteres Ausführungsbeispiel für eine erfindungsgemäß ausgebildete Personenfördervorrichtung.

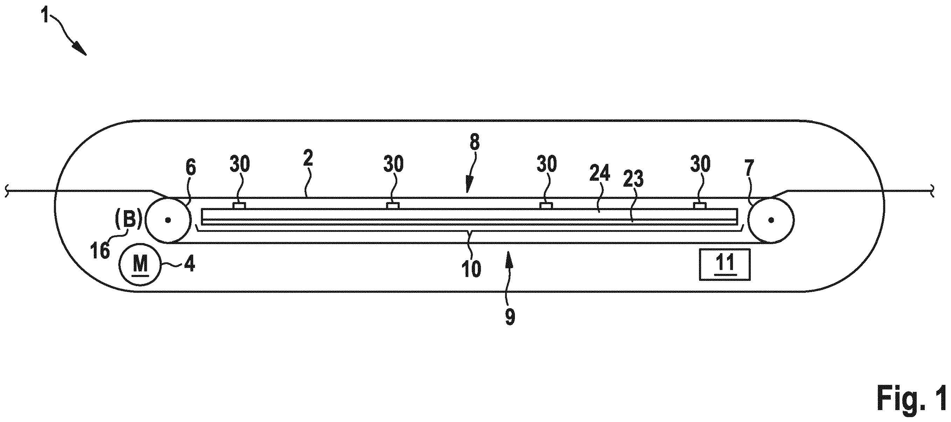

Bei dem in Fig. 1 dargestellten Ausführungsbeispiel für eine erfindungsgemäße Personenfördervorrichtung ist die Personenfördervorrichtung 1 als Fahrsteig ausgebildet. Die Personenfördervorrichtung 1 umfasst ein Palettenband als endloses Transportband 2, welches von einer Mehrzahl von miteinander verbundenen Trittelementen (in Fig. 1 nicht explizit dargestellt), die in diesem Ausführungsbeispiel Paletten sind, gebildet wird. Das Transportband 2 ist dabei über eine erste Umkehrstation 6 und eine zweite Umkehrstation 7 geführt, derart, dass die Trittelemente des Transportbandes 2 einem Transportbereich 8 oder einem Rücklaufbereich 9 zugeordnet sind. Beim Betrieb der Personenfördervorrichtung 1 werden Nutzer der Personenfördervorrichtung 1 in dem Transportbereich 8 auf den Trittelementen befördert, wohingegen die Trittelemente des Transportbandes 2 in dem Rücklaufbereich 9 beim Betrieb der Personenfördervorrichtung 1 wieder vom Ende des Transportbereiches 8 zum Anfang des Transportbereiches 8 zurückgeführt werden. Angetrieben wird das Transportband 2 dabei von einer Antriebseinheit 4, beispielsweise einer Asynchronmaschine oder einer Synchronmaschine mit entsprechenden Übersetzungsgetrieben.

Zur Erkennung einer fehlerhaften Anordnung eines Trittelementes im Transportband 2 umfasst die in Fig. 1 dargestellte Personenfördervorrichtung 1 eine Überwachungseinrichtung 5. Eine fehlerhafte Anordnung eines Trittelementes ist dabei stets mit einem zumindest teilweisen Absinken eines Trittelementes verbunden, insbesondere verursacht durch einen Bruch des Trittelementes oder durch einen Bruch eines Verbindungselementes eines Trittelementes, welches das Trittelement in dem Transportband 2 hält, also beispielsweise einer Laufrolle.

Die Überwachungseinrichtung der in Fig. 1 gezeigten Personenfördervorrichtung 1 umfasst ein Detektionsmittel 10 sowie eine Auslöseeinheit 11. Das Detektionsmittel 10 ist dabei in Längserstreckungsrichtung der Personenfördervorrichtung 1 äquidistant unterhalb der Trittelemente des Transportbereichs 8 und oberhalb der Trittelemente des Rücklaufbereichs 9 zwischen der ersten Umkehrstation 6 und der zweiten Umkehrstation 7 mittig zu den Trittelementen angeordnet.

Das Detektionsmittel 10 umfasst in diesem Ausführungsbeispiel ein Dämpfungselement 24, welches auf einem Trägerelement 23, beispielsweise einer Metallschiene, angeordnet ist. An dem Dämpfungselement 24 sind dabei Beschleunigungssensoren 30 angeordnet, die ausgebildet sind, Beschleunigungsmesswerte zu erfassen. Das Dämpfungselement 24 ist dabei ein Schwingungsüberträger für die Beschleunigungssensoren 30.

Das Detektionsmittel 10 ist mit einer Auslöseeinheit 11, die vorliegend als elektronische Steuereinheit ausgebildet ist, verbunden (in Fig. 1 nicht explizit dargestellt), wobei die Auslöseeinheit die Messwerte von den Beschleunigungssensoren 30 erfasst und auswertet. Die Verbindung zwischen Auslöseeinheit 11 und Beschleunigungssensoren 30 kann leitungsgebunden und/oder drahtlos erfolgen.

Sollte sich nun ein Trittelement des Transportbereichs 8 aus dem Transportband 2 lösen, so sackt dieses Trittelement auf das Dämpfungselement 24 ab und wirkt somit mechanisch auf das Detektionsmittel 10 ein. Das mechanische Einwirken des Trittelements auf das Dämpfungselement 24 verursacht dabei eine Schwingung, die bei wenigstens einem der Beschleunigungssensoren 30 eine Änderung der erfassten Beschleunigungsmesswerte bewirkt. Bei einer vorbestimmten Änderung der Beschleunigungsmesswerte löst die Auslöseeinheit 11 aus. Dazu kann die Auslöseeinheit 11 eine Komparatoreinheit aufweisen (in Fig. 1 nicht dargestellt), die die erfassten Beschleunigungsmesswerte mit einem vorbestimmten Beschleunigungsmesswert als Grenzwert vergleicht.

Überschreitet ein erfasster Beschleunigungsmesswert den vorbestimmten Beschleunigungsmesswert, hat sich also ein Beschleunigungsmesswert in vorbestimmter Weise geändert, so löst die Auslöseeinheit 11 aus. Die Überwachungseinrichtung hat somit eine fehlerhafte Anordnung eines Trittelementes im Transportband 2 erkannt. Durch das Auslösen der Auslöseeinheit 11 erfolgt in dem Ausführungsbeispiel eine Unterbrechung der Stromzufuhr für die Antriebseinheit 4, sodass die Antriebseinheit 4 gestoppt wird. Zusätzlich löst in dem Ausführungsbeispiel die Auslöseeinheit 11 eine Bremse 16 der Personenfördervorrichtung 1 aus. Die Auslöseeinheit 11 ist somit ausgebildet, das Transportband 2 durch entsprechende Ansteuerung von Antriebseinheit 4 und/oder Bremse 16 zum Anhalten zu bringen.

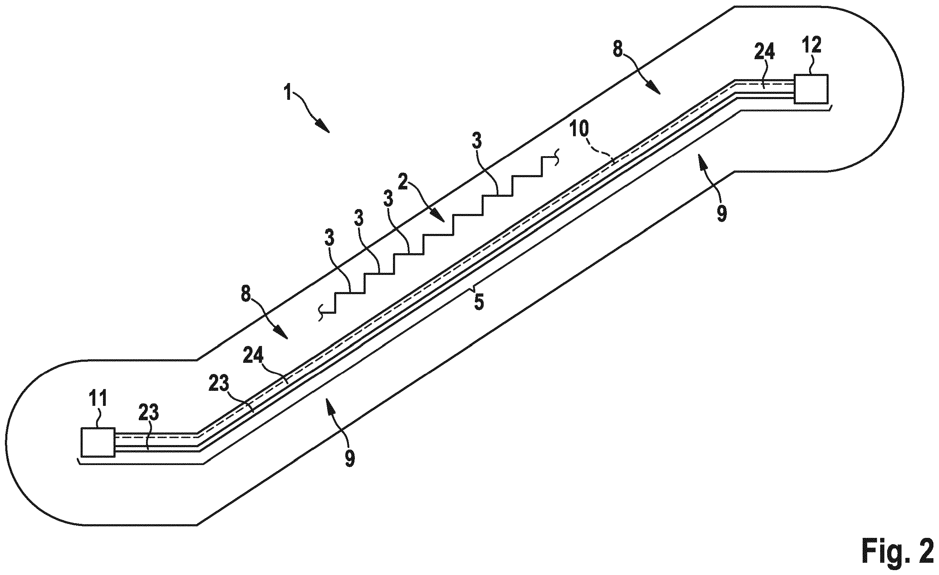

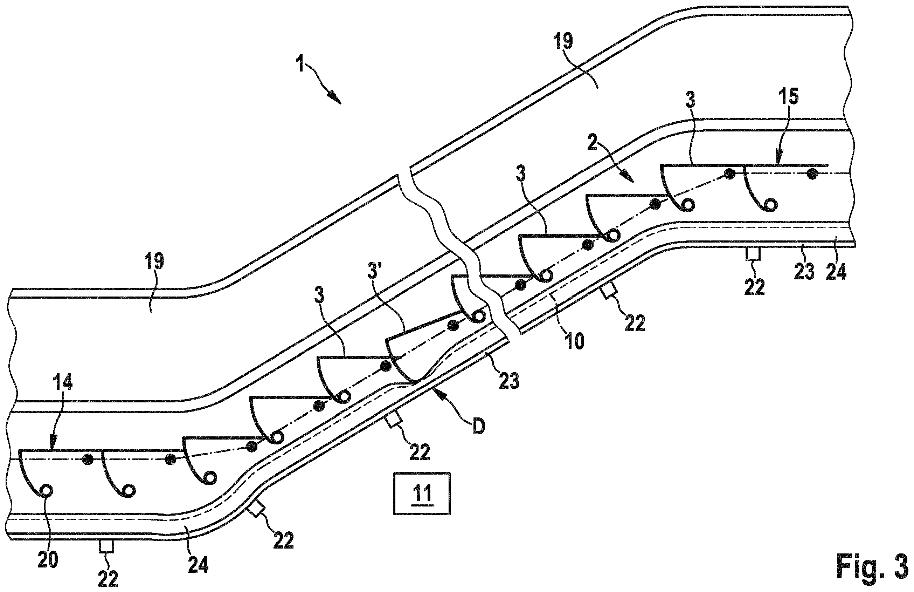

Das in Fig. 2 schematisch dargestellte Ausführungsbeispiel stellt eine Fahrtreppe als Personenfördervorrichtung 1 dar. Die Personenfördervorrichtung 1 weist dabei ein aus Stufen als Trittelementen 3 gebildetes endloses Stufenband als Transportband 2 auf, wobei aus Gründen der besseren Übersichtlichkeit nur ein Ausschnitt des Stufenbandes dargestellt ist. Wie bei einer Fahrtreppe üblich, durchläuft das Transportband 2 zwischen einer ersten Umkehrstation (in Fig. 2 nicht explizit dargestellt) und einer zweiten Umkehrstation (in Fig. 2 nicht explizit dargestellt) einen Transportbereich 8 und einen Rücklaufbereich 9. Angetrieben wird das Transportband 2 wie bei einer Fahrtreppe üblich von einer Antriebseinheit (in Fig. 3 nicht explizit dargestellt).

Die in Fig. 2 dargestellte Personenfördervorrichtung 1 weist eine Überwachungseinrichtung 5 zur Erkennung einer fehlerhaften Anordnung wenigstens eines Trittelementes 3 im Transportband 2 auf. Dazu ist in geringem Abstand unterhalb der von Nutzern der Personenfördervorrichtung 1 betretbaren Trittelemente 3, also zwischen den Trittelementen 3 des Transportbereichs 8 und den Trittelementen des Rücklaufbereichs 9, zwischen einer ersten Auslöseeinheit 11 und einer zweiten Auslöseeinheit 12 ein Detektionsmittel 10 angeordnet. Mit dem Detektionsmittel 10 ist dabei eine erste Auslöseeinheit 11 und eine zweite Auslöseeinheit 12 verbunden.

Dabei ist vorgesehen, dass bei mechanischer Einwirkung auf das Detektionsmittel 10 ein Signal generiert wird, welches von einer der Auslöseeinheiten 11, 12 oder von beiden Auslöseeinheiten 11, 12 empfangen wird und ein Auslösen der Auslöseeinheiten 11, 12 bewirkt.

Das Detektionsmittel 10 kann dabei beispielsweise wie im Zusammenhang mit Fig. 1 erläutert ausgebildet sein.

Unter Bezugnahme auf Fig. 2 wird nachfolgend zudem eine weitere Ausgestaltungsvariante beschrieben. Bei dieser Ausgestaltungsvariante ist das Detektionsmittel 10 aus einem mechanisch gespannten Seil gebildet, welches bei mechanischer Einwirkung ausgelenkt wird, wobei bei einer vorbestimmten Auslenkung die Auslöseeinheit 11 und/oder die Auslöseeinheit 12 auslöst.

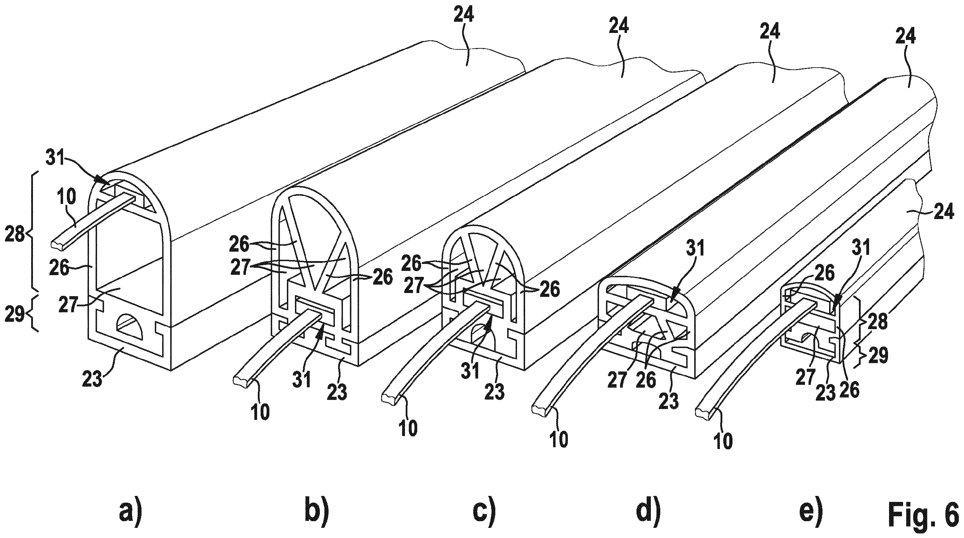

Das Seil ist dabei innerhalb eines Dämpfungselements 24 geführt, wozu das Dämpfungselement 24 einen entsprechenden Aufnahmeraum, wie später in Zusammenhang mit Fig. 6 erläutert, aufweist. Um ein Biegen beziehungsweise Knicken des Dämpfungselementes 24 im oberen Bereich und im unteren Bereich der Personenfördervorrichtung 1 zu verhindern, kann insbesondere vorgesehen sein, dass das Dämpfungselement 24 von wenigstens drei Dämpfungselementen gebildet wird, mit einem Dämpfungselement im unteren Bereich, einem weiteren Dämpfungselement im oberen Bereich und wenigstens einem weiteren Dämpfungselement im Steigungsbereich zwischen oberem Bereich und unterem Bereich.

Das Dämpfungselement 24 ist dabei in dieser Ausgestaltungsvariante als elastisch verformbares Dämpfungsteil aus Kunststoff ausgebildet. Ferner weist das Dämpfungselement 24 einen Stauchraum auf, wie unter Bezugnahme auf Fig. 6 später näher erläutert wird.

Das Dämpfungselement 24 ist auf einem Trägerelement 23 angeordnet, wobei das Trägerelement 23 als Stützelement ausgebildet ist. Das Stützelement kann insbesondere ein Stahlträger sein. Das Stützelement stützt dabei vorteilhafterweise ein aus dem Transportbereich 8 herausgelöstes Trittelement und verhindert insbesondere, dass ein solches Trittelement vollständig aus dem Transportband 2 herausgelöst wird und sich eine Öffnung bildet, in die Personen stürzen könnten.

Bei der Ausgestaltungsvariante können die Auslöseeinheiten 11, 12 insbesondere als Mikroschalter ausgebildet sein, die mit den Seilenden des Detektionsmittels 10 verbunden sind. Die Mikroschalter öffnen dabei, wenn das Detektionsmittel 10 in Folge des Auftretens einer fehlerhaften Anordnung eines Trittelementes 3 und der damit verbundenen mechanischen Einwirkung auf das Detektionsmittel 10 ausgelenkt wird. Das Öffnen des Mikroschalters stellt dabei das Auslösen der jeweiligen Auslöseeinheit 11, 12 dar. Mit dem Öffnen des Mikroschalters lassen sich dabei unterschiedliche Maßnahmen auslösen, die die Fahrtreppe insbesondere in einen sicheren Betriebszustand überführen. Solche Maßnahmen sind insbesondere ein Abbremsen des Transportbandes 2, sowie ein Stoppen der Antriebseinheit der Fahrtreppe.

Die in Fig. 3 ausschnittsweise dargestellte Personenfördervorrichtung 1 ist wiederum eine Fahrtreppe mit einem aus Stufen als Trittelementen 3 gebildeten Transportband 2. In Fig. 3 ist dabei lediglich der betretbare Transportbereich des Transportbandes 2 dargestellt und nicht der Rücklaufbereich des Transportbandes 2. Insbesondere ist die Personenfördervorrichtung 1 im mittleren Bereich verkürzt dargestellt (in Fig. 3 durch die mittig angeordneten Schnittlinien symbolisch dargestellt). Eine explizite Darstellung der Antriebseinheit sowie der Umkehrstationen, bei denen der Wechsel von Transportbereich zu Rücklaufbereich beziehungsweise von Rücklaufbereich zu Transportbereich erfolgt, erfolgt in Fig. 3 aus Gründen der besseren Übersichtlichkeit ebenfalls nicht. Die in Fig. 3 dargestellte Personenfördervorrichtung 1 verbindet jeweils ein erstes Höhenniveau 14 mit einem zweiten höhergelegenerem Höhenniveau 15, also beispielsweise zwei Etagen eines Gebäudes. Schematisch dargestellt ist ebenfalls eine Balustrade 19 mit Handlauf.

Die Personenfördervorrichtung 1 weist ferner eine Überwachungseinrichtung zur Erkennung einer fehlerhaften Anordnung wenigstens eines Trittelementes auf, welche ein Detektionsmittel 10 und eine mit dem Detektionsmittel 10 verbundene Auslöseeinheit 11 (die Verbindung ist in Fig. 3 nicht explizit dargestellt) umfasst.

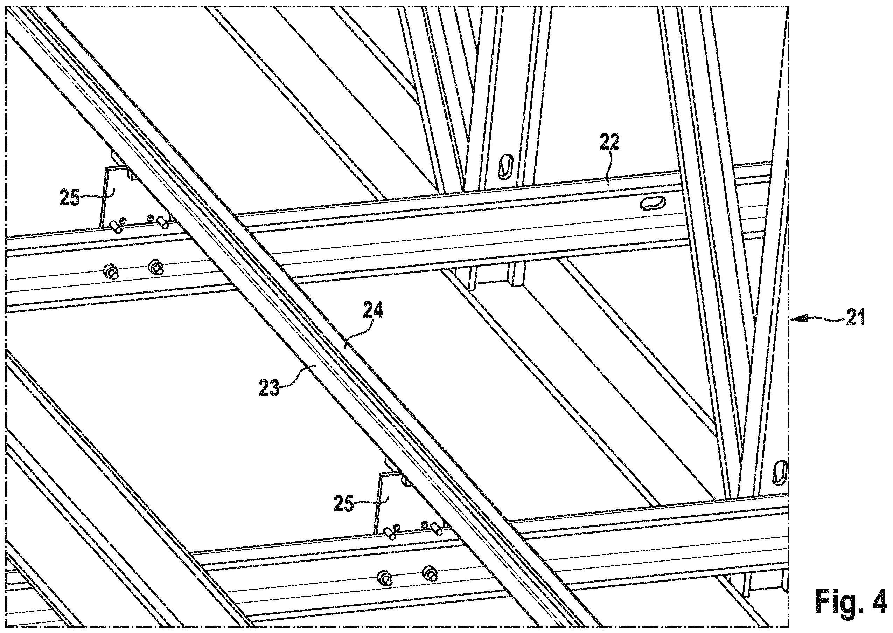

Die Personenfördervorrichtung 1 weist ferner, wie bei einer Fahrtreppe üblich, eine Tragkonstruktion (in Fig. 3 nicht explizit dargestellt) auf, in welcher das Transportband 2 geführt ist. An Querstreben 22 der Tragkonstruktion weist die Personenfördervorrichtung 1 eine Metallschiene als Trägerelement 23 auf. Das Trägerelement 23 ist dabei vorteilhafterweise äquidistant unterhalb des Transportbandes 2 angeordnet. Für die äquidistante Anordnung unterhalb des Transportbandes 2 kann das Trägerelement 23 entsprechend gebogen sein. Auf diesem Trägerelement 23 ist ein Dämpfungselement 24 angeordnet, beispielsweise wie unter Bezugnahme auf Fig. 4 näher erläutert. Das Dämpfungselement 24 kann dabei, wie im Zusammenhang mit Fig. 6 näher erläutert, ausgebildet sein. Insbesondere ist vorgesehen, dass ein Detektionsmittel 10 innerhalb des Dämpfungselementes 24 angeordnet ist. Das Detektionsmittel 10 kann dabei insbesondere ein kapazitiver Näherungssensor oder ein induktiver Näherungssensor oder ein Widerstandssensor sein. Das Detektionsmittel 10 liefert dabei ein Signal an die Auslöseeinheit 11. Das Detektionsmittel 10 erstreckt sich dabei insbesondere über die gesamte Länge des Dämpfungselementes 24. Insbesondere ist weiter vorgesehen, dass das Detektionsmittel 10 dem Verlauf des Dämpfungselementes 24 beziehungsweise dem Verlauf des Trägerelementes 23 folgt.

In Fig. 3 ist ferner eine fehlerhafte Anordnung eines Trittelementes 3' in dem Transportband 2 gezeigt. Beispielsweise kann die Aufhängung der Laufrollen 20 des Trittelementes 3' weggebrochen sein, wodurch das Trittelement 3' abgesunken ist und mechanisch auf das Dämpfungselement 24 und somit auch auf das in dem Dämpfungselement 24 angeordnete Detektionsmittel 10 einwirkt. In Fig. 3 weist das Bezugszeichen D dabei auf die elastische Verformung des Dämpfungselementes 24, die in Folge der mechanischen Einwirkung auftritt. Das Trägerelement 23 stützt dabei das Trittelement 3', sodass dieses nicht vollständig aus dem Transportband 2 fällt und verhindert somit, dass eine Öffnung in dem Transportband 2 freigeben wird. Durch das mechanische Einwirken auf das Detektionsmittel 10 ändert sich das an die Auslöseeinheit übertragene Signal. Je nach Ausgestaltung des Detektionsmittels 10 tritt beispielsweise eine Kapazitätsänderung oder eine Induktivitätsänderung oder eine Widerstandsänderung auf, sodass sich das übertragene Signal entsprechend ändert. Bei einer vorbestimmten Signaländerung, insbesondere beim Überschreiten von vorbestimmten Signalwerten, die an die Auslöseeinheit 11 übertragen werden, löst die Auslöseeinheit 11 aus.

Fig. 4 zeigt beispielhaft die Anbringung des Trägerelementes 23 an der Tragkonstruktion 21 einer Personenfördervorrichtung. Die Fachwerkstruktur der Tragkonstruktion 21 umfasst dabei insbesondere Querstreben 22, die orthogonal zu der Längserstreckungsrichtung der Tragkonstruktion 21 und somit orthogonal zu einer Personenfördervorrichtung, die eine solche Tragkonstruktion 21 umfasst, angeordnet sind. An diesen Querstreben 22 ist über Verbindungselemente 25 ein Trägerelement 23, beispielsweise ein Vierkantrohr, angeordnet. Die Verbindung zwischen Verbindungselement 25 und Querstrebe 22 sowie die Verbindung zwischen Verbindungselement 25 und Trägerelement 23 kann insbesondere durch Verschrauben oder Verschweißen erfolgen. Auf dem Trägerelement 23 ist ferner ein Dämpfungselement 24 angeordnet. Dazu kann das Dämpfungselement 24 eine Metallschiene aufweisen, die auf den Trägerelement 23 montiert ist, wobei ein elastisch verformbares Dämpfungsteil fest mit der Metallschiene verbunden ist, insbesondere mittels einer Nut-Feder-Verbindung wie beispielsweise in Fig. 6 gezeigt.

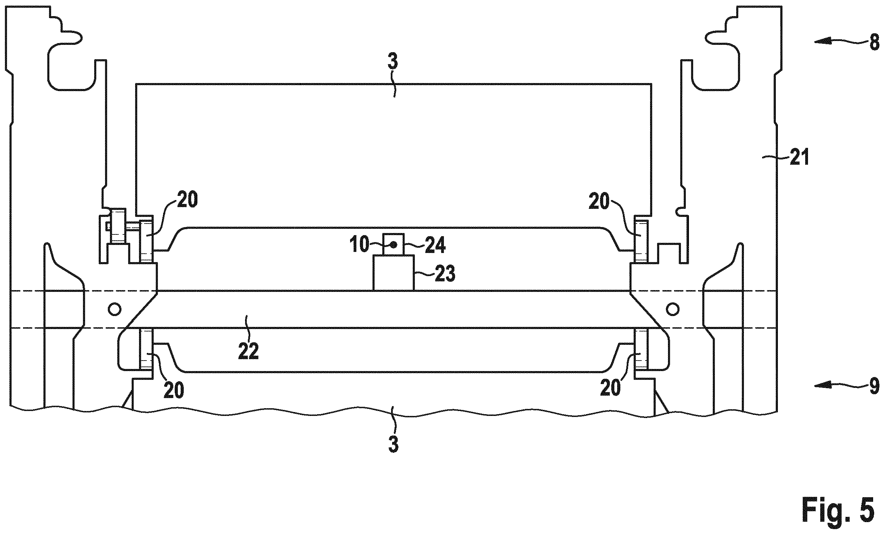

Fig. 5 zeigt in einem Querschnitt einen Teilbereich einer Personenfördervorrichtung. Dargestellt ist dabei eine Tragkonstruktion 21 einer Personenfördervorrichtung in der das Transportband geführt ist. Zu sehen ist dabei eine Stufe als Trittelement 3 in dem Transportbereich 8 sowie der Teil einer Stufe als Trittelement 3 in dem Rücklaufbereich 9. Die Trittelemente 3 weisen dabei Laufrollen 20 auf, die auf entsprechenden Führungen laufen. In einem geringen Abstand, beispielsweise einem Abstand zwischen 1 cm und 10 cm (cm: Zentimeter), insbesondere einem Abstand zwischen 3 cm und 6 cm, unterhalb der Trittelemente 3 im Transportbereich 8 ist dabei in Längserstreckungsrichtung der Personenfördervorrichtung mittig zu den Trittelementen 3 ein Detektionsmittel 10 zur Detektion eines fehlerhaft im Transportband angeordneten Trittelementes angeordnet. Das Detektionsmittel 10 ist dabei in einem Dämpfungselement angeordnet, wie insbesondere im Zusammenhang mit Fig. 6 näher erläutert.

Sackt ein Trittelement 3 ab, beispielsweise weil eine Laufrolle 20 bricht, so schlägt das Trittelement 3 auf das Detektionsmittel 10 auf. Das Trägerelement 23 bewirkt dabei, dass das Trittelement nicht weiter absackt. Durch das Aufschlagen des Trittelementes 3 auf das Detektionsmittel 10 löst eine in Fig. 5 nicht explizit dargestellte Auslöseeinheit, beispielsweise eine entsprechend programmierte Mikrocontroller-Schaltung, aus.

In Fig. 6 sind vorteilhafte Ausgestaltungen a) bis e) für Dämpfungselemente 24, in denen ein Detektionsmittel 10 angeordnet ist, dargestellt. Die Dämpfungselemente 24 sind dabei, wie in Fig. 6 dargestellt, über vorteilhafte formschlüssige Verbindungen, insbesondere T-förmige Nut-Feder-Verbindungen, mit einem als Metallschiene ausgebildeten Trägerelement 23 verbunden. Die Verbindung erfolgt dabei über ein entsprechend ausgeformtes Anbindungsteil 29 des Dämpfungselementes 24, welches sich über die gesamte Länge des jeweiligen Dämpfungselementes 24 erstreckt. Darüber hinaus umfassen die Dämpfungselemente 24 jeweils einen sich über die Längserstreckung des Dämpfungselementes 24 erstreckenden Dämpfungsteil 28, der elastisch verformbar ausgebildet ist. Insbesondere ist vorgesehen, dass der Dämpfungsteil 28 ebenso wie der Anbindungsteil 29 dabei aus einem Kunststoff ist.

Der Dämpfungsteil 28 der Dämpfungselemente 24 weist dabei jeweils wenigstens zwei Stützwandungen 26 auf, zwischen denen in Längserstreckungsrichtung des jeweiligen Dämpfungselementes 24 ein Stauchraum 27 ausgebildet ist. Dieser Stauchraum 27 wird dabei bei mechanischer Einwirkung auf das jeweilige Dämpfungselement 24 von oben, also insbesondere durch ein absinkendes Trittelement, zusammengestaucht.

Bei den in Fig. 6 dargestellten Ausführungsbeispielen weist das Dämpfungselement 24 zudem jeweils einen sich über die Länge des Dämpfungselementes 24 erstreckenden Aufnahmeraum 31 auf, in welchem jeweils ein Detektionsmittel 10 angeordnet ist. Wie bereits weiter oben stehend ausgeführt, kann das Detektionsmittel 10 auf unterschiedliche Weise ausgeführt sein. Jedenfalls ist das Detektionsmittel 10 so ausgebildet, dass eine mechanische Einwirkung auf das Dämpfungselement 24 und somit auch auf das Detektionsmittel 10 ein Auslösen einer Auslöseeinheit (in Fig. 6 nicht dargestellt) bewirkt. Dies kann insbesondere indirekt durch eine Auslenkung des Detektionsmittels erfolgen, die beispielsweise bei Ausgestaltung des Detektionsmittels als kapazitiver Näherungssensor, eine Änderung der Kapazität bewirkt. Entsprechend wird bei einem induktiven Näherungssensor eine Änderung der Induktivität bewirkt und bei einem Widerstandssensor eine Änderung des Widerstands.

Bei einer Ausgestaltung, bei der das Detektionsmittel einen elastisch verformbaren Lichtleiter umfasst, ist dieser in dem Aufnahmeraum 31 angeordnet. An einem Ende des Lichtleiters wird dann ein optisches Signal eingespeist, welches an dem anderen Ende des Lichtleiters von einem optischen Sensor empfangen wird. Bei einer mechanischen Einwirkung auf das Dämpfungselement 28 und damit bei einer mechanischen Einwirkung auf den Lichtleiter, ändert sich das von dem optischen Sensor empfangene optische Signal, wodurch die Auslöseeinheit zur Auslösung gebracht wird. Entsprechend würde sich auch eine erfasste Strömung bei Verwendung eines fluiddurchströmten Schlauches anstelle des Lichtleiters und eines Strömungssensors anstelle des optischen Sensors bei mechanischer Einwirkung ändern, was zu einem Auslösen der Auslöseeinheit führen würde.

Als eine weitere Ausgestaltung kann ein Seil als Detektionsmittel 10 durch den Aufnahmeraum 31 geführt sein. Das Seil ist dabei mechanisch gespannt und zumindest an einem Ende mit einem Zugsensor oder einem Mikroschalter als Auslöseeinheit verbunden, der öffnet, wenn das Seil aufgrund mechanischer Einwirkung ausgelenkt wird. Die Auslösung erfolgt dabei durch Öffnen des Schalters. Vorteilhafterweise ist das Detektionsmittel oben im Dämpfungselement 24 angeordnet, wie beispielsweise in Fig. 6 a), d) und e) dargestellt.

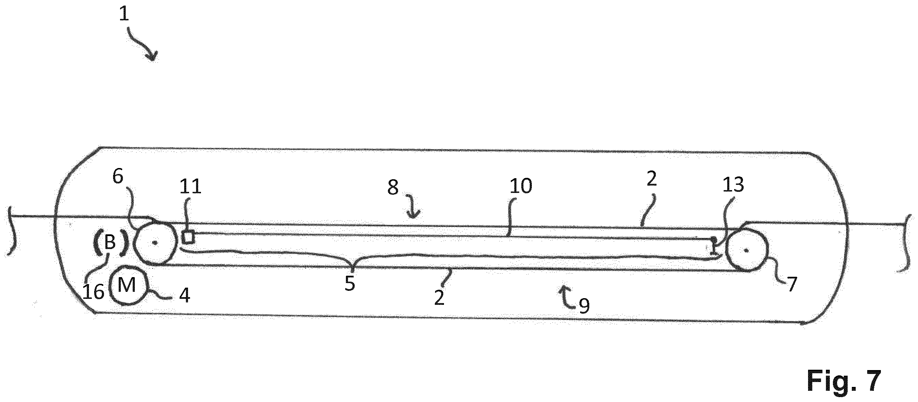

Bei dem in Fig. 7 dargestellten Ausführungsbeispiel für eine erfindungsgemäße Personenfördervorrichtung ist die Personenfördervorrichtung 1 als Fahrsteig ausgebildet. Die Personenfördervorrichtung 1 umfasst ein Palettenband als endloses Transportband 2, welches von einer Mehrzahl von miteinander verbundenen Trittelementen (in Fig. 7 nicht explizit dargestellt), die in diesem Ausführungsbeispiel Paletten sind, gebildet wird. Das Transportband 2 ist dabei über eine erste Umkehrstation 6 und eine zweite Umkehrstation 7 geführt, sodass die Trittelemente des Transportbandes 2 einen Transportbereich 8, in welchem beim Betrieb der Personenfördervorrichtung 1 Nutzer der Personenfördervorrichtung 1 befördert werden, und einen Rücklaufbereich 9, in welchem die Trittelemente des Transportbandes 2 beim Betrieb der Personenfördervorrichtung 1 wieder vom Ende des Transportbereiches 8 zum Anfang des Transportbereiches 8 zurückgeführt werden. Angetrieben wird das Transportband 2 dabei von einer Antriebseinheit 4, beispielsweise einer Asynchronmaschine oder einer Synchronmaschine mit entsprechenden Übersetzungsgetrieben.

Zur Erkennung einer fehlerhaften Anordnung eines Trittelementes im Transportband 2 umfasst die in Fig. 7 dargestellte Personenfördervorrichtung 1 eine Überwachungseinrichtung 5. Eine fehlerhafte Anordnung eines Trittelementes ist dabei stets mit einem zumindest teilweisen Absinken eines Trittelementes verbunden, insbesondere verursacht durch einen Bruch des Trittelementes oder der Verbindung zwischen zwei Trittelementen.

Die Überwachungseinrichtung 5 der in Fig. 7 gezeigten Personenfördervorrichtung 1 ist zwischen der ersten Umkehrstation 6 und der zweiten Umkehrstation 7 angeordnet. Die Überwachungseinrichtung 5 umfasst dabei in diesem Ausführungsbeispiel ein als Drahtseil ausgebildetes Detektionsmittel 10, eine Auslöseeinheit 11, die in dem Ausführungsbeispiel als Mikroschalter ausgebildet ist, und ein Halteelement 13, das in dem Ausführungsbeispiel als Metallhaken ausgebildet ist.

Das Detektionsmittel 10 ist dabei in Längserstreckungsrichtung der Personenfördervorrichtung 1 zwischen der ersten Umkehrstation 6 und der zweiten Umkehrstation 7 und zwischen dem Transportbereich 8 und dem Rücklaufbereich 9, also insbesondere unterhalb der Trittelemente des Transportbereiches 8, angeordnet. Das Detektionsmittel 10 ist dabei ferner mittig zu dem Transportband 2 zwischen der Auslöseeinheit 11 und dem Halteelement 13 mechanisch gespannt.

Sinkt nun ein Trittelement ab, beispielsweise aufgrund eines Verbindungsbruchs zwischen zwei benachbarten Trittelementen, so sinkt das Trittelement auf das Detektionsmittel 10, wodurch das Detektionsmittel 10 ausgelenkt wird. Durch die Auslenkung des Detektionsmittel öffnet der Mikroschalter, das heißt die Auslöseeinheit 11 löst aus. Eine fehlerhafte Anordnung eines Trittelementes im Transportband 2 ist somit erkannt. Durch das Öffnen des Mikroschalters, also das Auslösen der Auslöseeinheit 11, erfolgt eine Unterbrechung der Stromzufuhr für die Antriebseinheit 4, sodass die Antriebseinheit 4 gestoppt wird. Zusätzlich löst das Öffnen des Mikroschalters eine Bremse 16 der Personenfördervorrichtung 1 aus. Die Auslöseeinheit 11 ist somit ausgebildet, das Transportband 2 zum Anhalten zu bringen.

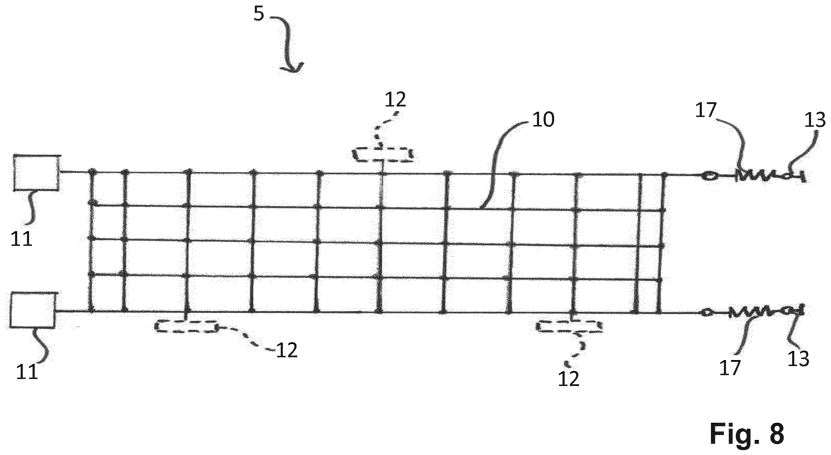

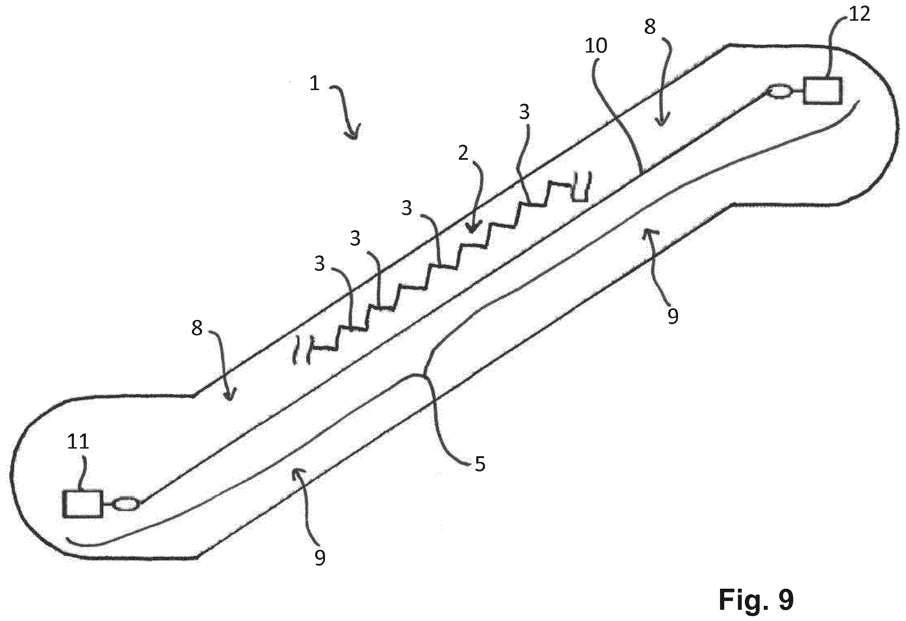

Das in Fig. 8 gezeigte Ausführungsbeispiel für eine Überwachungseinrichtung 5 ist eine vorteilhafte Ausgestaltungsvariante für eine solche Überwachungseinrichtung und könnte beispielsweise alternativ in der in Fig. 7 oder Fig. 9 jeweils dargestellten Personenfördervorrichtung eingesetzt werden.

Die Überwachungseinrichtung 5 umfasst dabei ein Detektionsmittel 10, welches aus mehreren Seilen zu einem Netz ausgebildet ist. Die Seile können dabei insbesondere Stahlseile sein. Die Netzbreite ist dabei vorteilhafterweise so bemessen, dass es der Breite der Trittelemente der Personenfördervorrichtung, in der die Überwachungseinrichtung 5 eingesetzt werden soll, entspricht. Hierdurch ist eine besonders gute Erkennbarkeit von fehlerhaft angeordneten Trittelementen ermöglicht.

Das Detektionsmittel 10 ist zwischen Auslöseeinheiten 11 und Halteelementen 13 unter Zugspannung angeordnet. Zwischen den dem Detektionsmittel 10 und den Halteelementen 13 sind dabei mechanische Federn als Ausgleichsmittel 17 angeordnet, durch welche eine gleichbleibende Zugspannung des Detektionsmittels 10 sicherstellen sollen. Insbesondere ein durch Materialausdehnung verursachtes Nachlassen der Zugspannung des gespannten Detektionsmittels 10 soll durch die Ausgleichsmittel 17 ausgeglichen werden. Neben den den Halteelementen gegenüberliegenden Auslöseeinheiten 11 sind seitlich des Detektionsmittels 10 weitere Auslöseeinheiten 12 vorgesehen. Die Auslöseeinheiten 11, 12 sind jeweils ausgebildet, bei einer Auslenkung des Detektionsmittels 10, also wenn ein Trittelement aufgrund fehlerhafter Anordnung im Transportband auf das Detektionsmittel drückt, auszulösen. Die seitlichen Auslöseeinheiten 12 können dabei das Erkennen einer fehlerhaften Anordnung eines Trittelementes weiter verbessern. Insbesondere können diese Auslöseeinheiten auch zur Plausibilisierung von von den Auslöseeinheiten 11 gelieferten Ergebnissen genutzt werden. Insbesondere kann vorgesehen sein, dass die Auslöseeinheiten 11 als Zugsensoren ausgebildet sind und die seitlichen Auslöseeinheiten als Mikroschalter.

Gemäß einer vorteilhaften Ausgestaltung sind die Auslöseeinheiten 11 zudem ausgebildet, bei einem Reißen des Detektionsmittels, also wenn die Zugspannung des Detektionsmittels 10 abrupt nachlässt, auszulösen. Dies ist insbesondere von Vorteil, wenn die Seile des Detektionsmittels 10 sehr dünn, beispielsweise mit einem Querschnitt von weniger als zwei Millimetern, ausgebildet sind, und ein gebrochenes Trittelement das Detektionsmittel 10 durchschlagen könnte. Auf diese Weise wird auch bei diesem Szenario eine fehlerhafte Anordnung des Trittelementes zuverlässig erkannt.

Das in Fig. 9 gezeigte Ausführungsbeispiel stellt eine Fahrtreppe als Personenfördervorrichtung 1 dar. Die Personenfördervorrichtung 1 weist dabei ein aus Stufen als Trittelementen 3 gebildetes endloses Stufenband als Transportband 2 auf, wobei aus Gründen der besseren Übersichtlichkeit nur ein Ausschnitt des Stufenbandes dargestellt ist. Wie bei einer Fahrtreppe üblich, durchläuft das Transportband 2 zwischen einer ersten Umkehrstation (in Fig. 9 nicht explizit dargestellt) und einer zweiten Umkehrstation (in Fig. 9 nicht explizit dargestellt) einen Transportbereich 8 und einen Rücklaufbereich 9. Angetrieben wird das Transportband 2 wie bei einer Fahrtreppe üblich von einer Antriebseinheit (in Fig. 9 nicht explizit dargestellt).

Die in Fig. 9 dargestellte Personenfördervorrichtung 1 weist eine Überwachungseinrichtung 5 zur Erkennung einer fehlerhaften Anordnung wenigstens eines Trittelementes 3 im Transportband 2 auf. Dazu ist in geringem Abstand unterhalb der von Nutzern der Fahrtreppe betretbaren Trittelemente 3, also unterhalb der Trittelemente 3 des Transportbereichs 8, zwischen einer ersten Auslöseeinheit 11 und einer zweiten Auslöseeinheit 12 ein Seil als Detektionsmittel 10 gespannt. Die Auslöseeinheit 11 und die Auslöseeinheit 12 sind dabei zwischen der ersten Umkehrstation und der zweiten Umkehrstation angeordnet. Die Auslöseeinheiten 11, 12 sind dabei als Mikroschalter ausgebildet, welche öffnen, wenn das Detektionsmittel 10 in Folge des Auftretens einer fehlerhaften Anordnung eines Trittelementes 3, insbesondere eines Stufenbruchs, ausgelenkt wird. Das Öffnen des Mikroschalters stellt dabei das Auslösen der jeweiligen Auslöseeinheit 11, 12 dar. Mit dem Öffnen des Mikroschalters lassen sich dabei unterschiedliche Maßnahmen auslösen, die die Fahrtreppe insbesondere in einen sicheren Betriebszustand überführen. Solche Maßnahmen sind insbesondere ein Abbremsen des Transportbandes 2, sowie ein Stoppen der Antriebseinheit der Fahrtreppe.

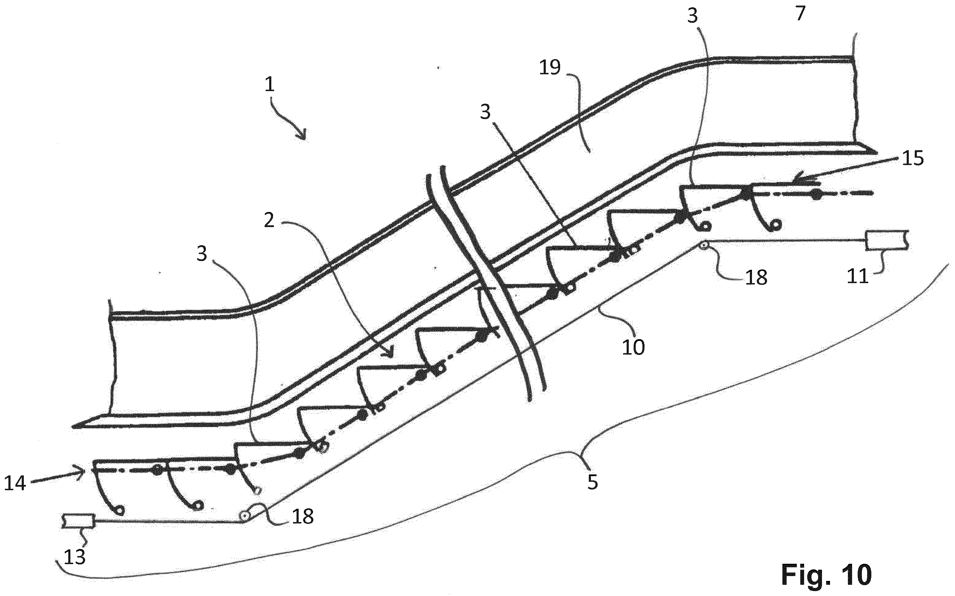

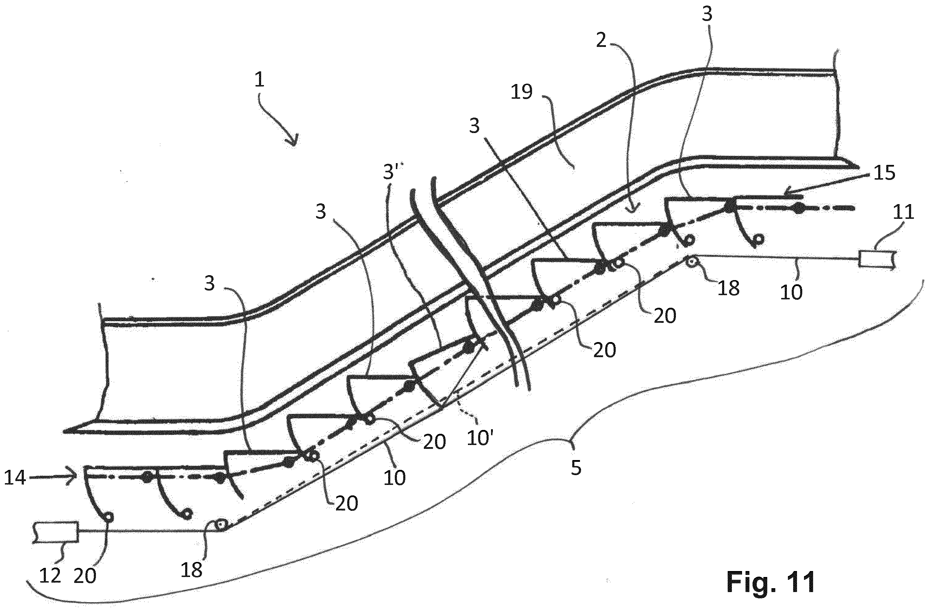

Die in Fig. 10 und Fig. 11 dargestellten Ausführungsbeispiele beziehen sich ebenfalls auf Fahrtreppen als Personenfördervorrichtungen. Die Fahrtreppen sind dabei in Fig. 10 und Fig. 11 jeweils im mittleren Bereich gekürzt dargestellt (in Fig. 10 und Fig. 11 durch die mittig angeordneten Schnittlinien symbolisch dargestellt). Die Fahrtreppen weisen dabei, wie bei Fahrtreppen üblich, eine Balustrade 19 mit Handlauf auf. Als Transportband 2 weisen die Personenfördervorrichtungen 1 wiederum ein Stufenband auf, welches aus einer Mehrzahl von Stufen als Trittelementen 3 gebildet ist. In Fig. 10 und Fig. 11 ist dabei lediglich der betretbare Transportbereich des Transportbandes dargestellt und nicht der Rücklaufbereich des Transportbandes. Eine explizite Darstellung der Antriebseinheit sowie der Umkehrstationen, bei denen der Wechsel von Transportbereich zu Rücklaufbereich beziehungsweise von Rücklaufbereich zu Transportbereich erfolgt, erfolgt in Fig. 10 und Fig. 11 nicht. Die in Fig. 10 und Fig. 11 dargestellten Personenfördervorrichtungen 1 verbinden jeweils ein erstes Höhenniveau 14 mit einem zweiten höhergelegenerem Höhenniveau 15, also beispielsweise zwei Etagen eines Gebäudes.

Die Personenfördervorrichtungen 1 weisen dabei jeweils eine Überwachungseinrichtung 5 zur Erkennung einer fehlerhaften Anordnung der Trittelemente 3 im Transportband 2, also einer fehlerhaften Anordnung der Stufen im Stufenband, auf.

Bei der in Fig. 10 dargestellten Personenfördervorrichtung 1 umfasst die Überwachungseinrichtung 5 ein unterhalb des Stufenbandes angeordnetes Detektionsmittel 10. Das Detektionsmittel 10 ist dabei aus einem Seil gebildet, welches zwischen einem Halteelement 13, beispielsweise einer Metallöse, und einer Auslöseeinheit 11 gespannt. Das Halteelement ist dabei auf dem ersten Höhenniveau 14 angeordnet und die Auslöseeinheit auf dem zweiten Höhenniveau 15.

Da das Transportband 2 der Personenfördervorrichtungen 1 in dem Transportbereich in unterschiedlichen Ebenen verläuft, weist die Personenfördervorrichtung 1 Umlenkmittel 18 auf, über welche das Detektionsmittel 10 geführt ist. Die Umlenkmittel 18 sind in dem gezeigten Ausführungsbeispiel als Umlenkrollen realisiert. Diese bewirken, dass das Detektionsmittel 10 gleichmäßig gespannt ist. Darüber hinaus wird durch die Umlenkmittel 18 vorteilhafterweise ein im Wesentlichen gleichbleibender Abstand zwischen den Trittelementen 3 und dem Detektionsmittel 10 eingehalten.

Das in Fig. 11 dargestellte Ausführungsbeispiel unterscheidet sich von dem in Fig. 10 dargestellten Ausführungsbeispiel insbesondere dadurch, dass in Fig. 11 das Detektionsmittel 10 zwischen einer ersten Auslöseeinheit 11 und einer zweiten Auslöseeinheit 12 gespannt ist.

Zudem zeigt Fig. 11 eine fehlerhafte Anordnung eines Trittelementes 3 in dem Transportband 2. In dem Ausführungsbeispiel kann dabei vorgesehen sein, dass die Aufhängung der Laufrollen 20 einer Stufe 3' weggebrochen sind. Dadurch ist die Stufe 3' abgesunken und lenkt dabei das Detektionsmittel 10 aus. Zur vergleichenden Darstellung ist in Fig. 11 das nicht ausgelenkte Detektionsmittel 10' dargestellt. Die Auslenkung des Detektionsmittels 10 wird dabei von wenigstens einer der Auslöseeinheiten 11, 12, mit denen das Detektionsmittel 10 verbunden ist, erkannt, sodass zumindest eine der Auslöseeinheiten 11, 12 oder auch beide Auslöseeinheiten 11, 12 auslösen.

Die in den Figuren dargestellten und im Zusammenhang mit diesen erläuterten Ausführungsbeispiele dienen der Erläuterung der Erfindung und sind für diese nicht beschränkend. Insbesondere sind die in den Figuren dargestellten Merkmale nicht maßstabsgetreu wiedergegeben sondern lediglich illustrativ zur Verdeutlichung der Erfindung.

### Bezugszeichenliste

- 1: Personenfördervorrichtung
- 2: Transportband
- 3: Trittelement
- 3': fehlerhaft angeordnetes Trittelement
- 4: Antriebseinheit
- 5: Überwachungseinrichtung
- 6: erste Umkehrstation
- 7: zweite Umkehrstation
- 8: Transportbereich
- 9: Rücklaufbereich
- 10: Detektionsmittel
- 11: erste Auslöseeinheit
- 12: zweite Auslöseeinheit
- 13: Halteelement
- 14: erstes Höhenniveau
- 15: zweites Höhenniveau
- 16: Bremse
- 17: Ausgleichsmittel
- 18: Umlenkmittel
- 19: Balustrade mit Handlauf
- 20: Laufrolle
- 21: Tragkonstruktion
- 22: Querstrebe
- 23: Trägerelement
- 24: Dämpfungselement
- 25: Verbindungselement
- 26: Stützwandung
- 27: Stauchraum
- 28: Dämpfungsteil
- 29: Anbindungsteil
- 30: Sensor
- 31: Aufnahmeraum
- D: Verformung des Dämpfungselementes

## Patentansprüche

1. Personenfördervorrichtung (1), insbesondere Fahrtreppe oder Fahrsteig, umfassend eine Mehrzahl von zu einem endlosen Transportband (2) verbundenen Trittelementen (3), wenigstens eine Antriebseinheit (4) zum Antreiben des Transportbandes (2) und eine Überwachungseinrichtung (5) zur Erkennung einer fehlerhaften Anordnung wenigstens eines Trittelementes (3) im Transportband (2), wobei die Trittelemente (3) des angetriebenen Transportbandes (2) zwischen einer ersten Umkehrstation (6) und einer zweiten Umkehrstation (7) einen Transportbereich (8) und einen Rücklaufbereich (9) durchlaufen, wobei die Überwachungseinrichtung (5) wenigstens ein Detektionsmittel (10) und wenigstens eine Auslöseeinheit (11) aufweist, wobei das wenigstens eine Detektionsmittel (10) unterhalb der Trittelemente (3) des Transportbereichs (8) in Längserstreckungsrichtung der Personenfördervorrichtung zwischen der ersten Umkehrstation (6) und der zweiten Umkehrstation (7) angeordnet ist, das wenigstens eine Detektionsmittel (10) mit der wenigstens einen Auslöseeinheit (11) verbunden ist, **dadurch gekennzeichnet, dass** die wenigstens eine Auslöseeinheit (11) ausgebildet ist, bei einem mechanischen Einwirken wenigstens eines in dem Transportbereich (8) fehlerhaft angeordneten Trittelementes (3) auf das wenigstens eine Detektionsmittel (10) auszulösen.

2. Personenfördervorrichtung (1) nach Anspruch 1, **dadurch gekennzeichnet, dass** das wenigstens eine Detektionsmittel (10) mittig zu den Trittelementen (3) zwischen der ersten Umkehrstation (6) und der zweiten Umkehrstation (7) angeordnet ist.

3. Personenfördervorrichtung (1) nach einem der vorstehenden Ansprüche, **dadurch gekennzeichnet, dass** das wenigstens eine Detektionsmittel (10) unter Zugspannung unterhalb der Trittelemente (3) des Transportbereichs (8) zwischen der ersten Umkehrstation (6) und der zweiten Umkehrstation (7) angeordnet ist, wobei die wenigstens eine Auslöseeinheit (11) ausgebildet ist, bei Auslenkung des wenigstens einen Detektionsmittels (10) durch ein mechanisches Einwirken auf das wenigstens eine Detektionsmittel (10) auszulösen.

4. Personenfördervorrichtung (1) nach Anspruch 3, **dadurch gekennzeichnet, dass** das wenigstens eine Detektionsmittel (10) zwischen wenigstens einem Halteelement (13) und der wenigstens einen Auslöseeinheit (11) gespannt ist.

5. Personenfördervorrichtung (1) nach Anspruch 4, **dadurch gekennzeichnet, dass** die Personenfördervorrichtung (1) ein erstes Höhenniveau (14) mit einem zweiten Höhenniveau (15) verbindet, wobei das zweite Höhenniveau (15) höhergelegen ist als das erste Höhenniveau (14), wobei die wenigstens eine Auslöseeinheit (11) im Bereich des zweiten Höhenniveaus (15) angeordnet ist.

6. Personenfördervorrichtung (1) nach Anspruch 3, **dadurch gekennzeichnet, dass** die Überwachungseinrichtung (5) wenigstens eine erste Auslöseeinheit (11) und wenigstens eine zweite Auslöseeinheit (12) aufweist, wobei das Detektionsmittel (10) zwischen der wenigstens einen ersten Auslöseeinheit (11) und der wenigstens einen zweiten Auslöseeinheit (12) gespannt ist.

7. Personenfördervorrichtung (1) nach einem der vorstehenden Ansprüche, **dadurch gekennzeichnet, dass** das wenigstens eine Detektionsmittel (10) wenigstens ein mechanisch gespanntes Seil, insbesondere ein Stahlseil, umfasst, welches bei mechanischer Einwirkung ausgelenkt wird, wobei bei einer vorbestimmten Auslenkung die wenigstens eine Auslöseeinheit (11) auslöst.

8. Personenfördervorrichtung (1) nach einem der vorstehenden Ansprüche, **dadurch gekennzeichnet, dass** das wenigstens eine Detektionsmittel (10) einen kapazitiven Näherungssensor umfasst, dessen Kapazität sich bei mechanischer Einwirkung auf das Detektionsmittel (10) ändert, wobei bei einer vorbestimmten Kapazitätsänderung die wenigstens eine Auslöseeinheit (11) auslöst und/oder dass das wenigstens eine Detektionsmittel (10) einen induktiven Näherungssensor umfasst, dessen Induktivität sich bei mechanischer Einwirkung auf das Detektionsmittel (10) ändert, wobei bei einer vorbestimmten Induktivitätsänderung die wenigstens eine Auslöseeinheit (11) auslöst und/oder dass das wenigstens eine Detektionsmittel (10) einen Widerstandssensor umfasst, dessen Widerstand sich bei mechanischer Einwirkung auf das Detektionsmittel (10) ändert, wobei bei einer vorbestimmten Widerstandsänderung die wenigstens eine Auslöseeinheit (11) auslöst und/oder dass das wenigstens eine Detektionsmittel (10) einen optischen Sensor umfassend einen elastisch verformbaren Lichtleiter umfasst, dessen Messwerte sich bei mechanischer Einwirkung auf den Lichtleiter ändern, wobei bei einer vorbestimmten Messwertänderung die wenigstens eine Auslöseeinheit (11) auslöst und/oder dass das wenigstens eine Detektionsmittel (10) einen Strömungssensor umfassend einen fluiddurchströmten elastisch verformbaren Schlauch umfasst, dessen Strömungsmesswerte sich bei mechanischer Einwirkung auf den Schlauch ändern, wobei bei einer vorbestimmten Änderung der Strömungsmesswerte die wenigstens eine Auslöseeinheit (11) auslöst und/oder dass das wenigstens eine Detektionsmittel (10) einen auf einem Schwingungsüberträger angeordneten Beschleunigungssensor (30) umfasst, dessen Beschleunigungsmesswerte sich bei mechanischer Einwirkung auf den Schwingungsüberträger ändern, wobei bei einer vorbestimmten Änderung der Beschleunigungsmesswerte die wenigstens eine Auslöseeinheit (11) auslöst.

9. Personenfördervorrichtung (1) nach einem der vorstehenden Ansprüche, **dadurch gekennzeichnet, dass** das Detektionsmittel (10) an oder innerhalb wenigstens eines Dämpfungselementes (24) angeordnet ist, wobei das wenigstens eine Dämpfungselement (24) unterhalb der Trittelemente (3) des Transportbereichs (8) zwischen der ersten Umkehrstation (6) und der zweiten Umkehrstation (7) angeordnet ist.

10. Personenfördervorrichtung (1) nach Anspruch 9, **dadurch gekennzeichnet, dass** das wenigstens eine Dämpfungselement (24) zumindest einen sich über die Längserstreckung des Dämpfungselementes (24) erstreckenden Dämpfungsteil (28) aus einem elastisch verformbaren Material umfasst.

11. Personenfördervorrichtung (1) nach Anspruch 10, **dadurch gekennzeichnet, dass** das wenigstens eine Dämpfungsteil (28) wenigstens zwei seitliche Stützwandungen (26) aufweist, zwischen denen in Längserstreckungsrichtung des Dämpfungselementes (24) wenigstens ein Stauchraum (27) ausgebildet ist, welcher bei mechanischer Einwirkung auf das Dämpfungselement (24) durch ein absinkendes Trittelement (3) zusammengestaucht wird.

12. Personenfördervorrichtung (1) nach einem der Ansprüche 9 bis 11, **dadurch gekennzeichnet, dass** das wenigstens eine Dämpfungselement (24) an wenigstens einem Trägerelement (23) angeordnet ist.

13. Personenfördervorrichtung (1) nach Anspruch 12, **gekennzeichnet durch** wenigstens eine Tragkonstruktion (21) innerhalb derer das Transportband (2) geführt ist, wobei das wenigstens eine Trägerelement (23) an der Tragkonstruktion (21) angeordnet ist, wobei das wenigstens eine Trägerelement (23) insbesondere ein an der Tragkonstruktion (21) angeordnetes Metallprofil ist.

14. Personenfördervorrichtung (1) nach Anspruch 12 oder Anspruch 13, **dadurch gekennzeichnet, dass** unterhalb der Trittelemente (3) des Transportbereichs (8) zwischen der ersten Umkehrstation (6) und der zweiten Umkehrstation (7) in Längserstreckungsrichtung der Personenfördervorrichtung (1) ein Stützelement als Trägerelement (23) angeordnet ist.

15. Personenfördervorrichtung (1) nach einem der vorstehenden Ansprüche, **dadurch gekennzeichnet, dass** das Auslösen der wenigstens einen Auslöseeinheit (11) ein Anhalten des Transportbandes (2) auslöst und/oder dass das Auslösen der wenigstens einen Auslöseeinheit (11) einen Stopp der wenigstens einen Antriebseinheit (4) auslöst und/oder dass das Auslösen der wenigstens einen Auslöseeinheit (11) ein Betätigen wenigstens einer Bremse (16) der Personenfördervorrichtung (1) auslöst.

## Claims

1. Human transport device (1), in particular an escalator or travellator, comprising a plurality of tread elements (3) that are connected so as to form an endless transport belt (2), at least one drive unit (4) for driving the transport belt (2), and a monitoring apparatus (5) for identifying a faulty arrangement of at least one tread element (3) in the transport belt (2), wherein the tread elements (3) of the driven transport belt (2) between a first return station (6) and a second return station (7) run through a transport region (8) and a return region (9), wherein the monitoring apparatus (5) has at least one detection means (10) and at least one triggering unit (11), wherein the at least one detection means (10) in the direction of longitudinal extent of the human transport device is disposed between the first return station (6) and the second return station (7), so as to be below the tread elements (3) of the transport region (8), the at least one detection means (10) is connected to the at least one triggering unit (11), **characterized in that** the at least one triggering unit (11) is configured to be triggered in the event of a mechanical action of at least one tread element (3) disposed incorrectly in the transport region (8) on the at least one detection means (10).

2. Human transport device (1) according to Claim 1, **characterized in that** the at least one detection means (10) is disposed between the first return station (6) and the second return station (7), so as to be centric to the tread elements (3).

3. Human transport device (1) according to one of the preceding claims, **characterized in that** the at least one detection means (10) under tensile stress is disposed between the first return station (6) and the second return station (7), so as to be below the tread elements (3) of the transport region (8), wherein the at least one triggering unit (11) is configured to be triggered in the event of a deflection of the at least one detection means (10) by a mechanical action on the at least one detection means (10).

4. Human transport device (1) according to Claim 3, **characterized in that** the at least one detection means (10) is tensioned between at least one holding element (13) and the at least one triggering unit (11).

5. Human transport device (1) according to Claim 4, **characterized in that** the human transport device (1) connects a first height level (14) to a second height level (15), wherein the second height level (15) lies higher than the first height level (14), wherein the at least one triggering unit (11) is disposed in the region of the second height level (15).

6. Human transport device (1) according to Claim 3, **characterized in that** the monitoring apparatus (5) has at least one first triggering unit (11) and at least one second triggering unit (12), wherein the detection means (10) is tensioned between the at least one first triggering unit (11) and the at least one second triggering unit (12).

7. Human transport device (1) according to one of the preceding claims, **characterized in that** the at least one detection means (10) comprises at least one mechanically tensioned cable, in particular a steel cable, which in the event of a mechanical action is deflected, wherein the at least one triggering unit (11) is triggered at a pre-determined deflection.

8. Human transport device (1) according to one of the preceding claims, **characterized in that** the at least one detection means (10) comprises a capacitive proximity sensor, the capacitance thereof varying in the event of a mechanical action on the detection means (10), wherein the at least one triggering unit (11) is triggered at a pre-determined capacitance variation, and/or **in that** the at least one detection means (10) has an inductive proximity sensor, the induction thereof varying in the event of a mechanical action on the detection means (10), wherein the at least one triggering unit (11) is triggered at a pre-determined induction variation, and/or in that the at least one detection means (10) has a resistance sensor, the resistance thereof varying in the event of a mechanical action on the detection means (10), wherein the at least one triggering unit (11) is triggered at a pre-determined resistance variation, and/or **in that** the at least one detection means (10) comprises an optical sensor comprising an elastically deformable light conductor, the measured values thereof varying in the event of a mechanical action on the light conductor, wherein the at least one triggering unit (11) is triggered at a pre-determined measured-value variation, and/or **in that** the at least one detection means (10) comprises a flow sensor comprising a fluid-perfused elastically deformable hose, the measured-flow values thereof varying in the event of a mechanical action on the hose, wherein the at least one triggering unit (11) is triggered at a pre-determined variation of the measured-flow values, and/or **in that** the at least one detection means (10) comprises an acceleration sensor (30) that is disposed on a vibration transmitter, the measured-acceleration values of said acceleration sensor varying in the event of a mechanical action on the vibration transmitter, wherein the at least one triggering unit (11) is triggered at a pre-determined variation of the measured-acceleration values.

9. Human transport device (1) according to one of the preceding claims, **characterized in that** the detection means (10) is disposed on or within at least one damper element (24), wherein the at least one damper element (24) is disposed between the first return station (6) and the second return station (7), so as to be below the tread elements (3) of the transport region (8).

10. Human transport device (1) according to Claim 9, **characterized in that** the at least one damper element (24) comprises at least one damper part (28) from an elastically deformable material that extends across the longitudinal extent of the damper element (24).

11. Human transport device (1) according to Claim 10, **characterized in that** the at least one damper part (28) has at least two lateral support walls (26), at least one compression space (27) which in the event of a mechanical action on the damper element (24) by a sinking tread element (3) is compressed being configured in the direction of the longitudinal extent of the damper element (24), so as to be between said two lateral support walls (26).

12. Human transport device (1) according to one of Claims 9 to 11, **characterized in that** the at least one damper element (24) is disposed on at least one support element (23) .

13. Human transport device (1) according to Claim 12, **characterized by** at least one support structure (21), the transport belt (2) being guided within the latter, wherein the at least one support element (23) is disposed on the support structure (21), wherein the at least one support element (23) is in particular a metal profile which is disposed on the support structure (21).

14. Human transport device (1) according to Claim 12 or Claim 13, **characterized in that** a supporting element as a support element (23) is disposed in the direction of longitudinal extent of the human transport device (1) between the first return station (6) and the second return station (7), so as to be below the tread elements (3) of the transport region (8).

15. Human transport device (1) according to one of the preceding claims, **characterized in that** the triggering of the at least one triggering unit (11) triggers a stoppage of the transport belt (2), and/or **in that** the triggering of the at least one triggering unit (11) triggers a stoppage of the at least one drive unit (4), and/or **in that** the triggering of the at least one triggering unit (11) triggers an activation of at least one brake (16) of the human transport device (1).

## Revendications

1. Dispositif de transport de personnes (1), notamment escalier roulant ou trottoir roulant, comprenant une pluralité d'éléments formant marches (3) reliés de manière à former une bande transporteuse sans fin (2), au moins une unité d'entraînement (4) destinée à entraîner la bande transporteuse (2) et un organe de surveillance (5) destiné à détecter une disposition incorrecte d'au moins un élément formant marche (3) dans la bande transporteuse (2), les éléments formant marches (3) de la bande transporteuse entraînée (2) passant par une zone de transport (8) et une zone de retour (9) entre une première station d'inversion (6) et une deuxième station d'inversion (7), l'organe de surveillance (5) comportant au moins un moyen de détection (10) et au moins une unité de déclenchement (11), l'au moins un moyen de détection (10) étant disposé au-dessous des éléments formant marches (3) de la zone de transport (8) dans la direction d'extension longitudinale du dispositif de transport de personnes entre la première station d'inversion (6) et la deuxième station d'inversion (7), l'au moins un moyen de détection (10) étant relié à l'au moins une unité de déclenchement (11), **caractérisé en ce que** l'au moins une unité de déclenchement (11) est conçue pour se déclencher lors d'une action mécanique d'au moins un élément formant marche (3), disposé incorrectement dans la zone de transport (8), sur l'au moins un moyen de détection (10).

2. Dispositif de transport de personnes (1) selon la revendication 1, **caractérisé en ce que** l'au moins un moyen de détection (10) est disposé au centre des éléments formant marches (3) entre la première station d'inversion (6) et la deuxième station d'inversion (7).

3. Dispositif de transport de personnes (1) selon l'une des revendications précédentes, **caractérisé en ce que** l'au moins un moyen de détection (10) est disposé sous contrainte de traction au-dessous des éléments formant marches (3) de la zone de transport (8) entre la première station d'inversion (6) et la deuxième station d'inversion (7), l'au moins une unité de déclenchement (11) étant conçue pour se déclencher lorsque l'au moins un moyen de détection (10) est dévié par une action mécanique sur l'au moins un moyen de détection (10).

4. Dispositif de transport de personnes (1) selon la revendication 3, **caractérisé en ce que** l'au moins un moyen de détection (10) est tendu entre au moins un élément de retenue (13) et l'au moins une unité de déclenchement (11).

5. Dispositif de transport de personnes (1) selon la revendication 4, **caractérisé en ce que** le dispositif de transport de personnes (1) relie un premier niveau en hauteur (14) à un deuxième niveau en hauteur (15), le deuxième niveau en hauteur (15) étant plus élevé que le premier niveau en hauteur (14), l'au moins une unité de déclenchement (11) étant disposée dans la zone du deuxième niveau en hauteur (15).

6. Dispositif de transport de personnes (1) selon la revendication 3, **caractérisé en ce que** le dispositif de surveillance (5) comporte au moins une première unité de déclenchement (11) et au moins une deuxième unité de déclenchement (12), le moyen de détection (10) est tendu entre l'au moins une première unité de déclenchement (11) et l'au moins une deuxième unité de déclenchement (12).

7. Dispositif de transport de personnes (1) selon l'une des revendications précédentes, **caractérisé en ce que** l'au moins un moyen de détection (10) comprend au moins un câble tendu mécaniquement, notamment un câble en acier, qui est dévié lors d'une action mécanique, l'au moins une unité de déclenchement (11) étant déclenchée en cas de déviation prédéterminée.

8. Dispositif de transport de personnes (1) selon l'une des revendications précédentes, **caractérisé en ce que** l'au moins un moyen de détection (10) comprend un capteur de proximité capacitif dont la capacité varie lors d'une action mécanique sur le moyen de détection (10), l'au moins une unité de déclenchement (11) se déclenchant en cas de variation prédéterminée de la capacité, et/ou **en ce que** l'au moins un moyen de détection (10) comprend un capteur de proximité inductif dont l'inductance varie lors d'une action mécanique sur le moyen de détection (10), l'au moins une unité de déclenchement (11) se déclenchant en cas de variation prédéterminée de l'inductance, et/ou **en ce que** l'au moins un moyen de détection (10) comprend un capteur résistif dont la résistance varie lors d'une action mécanique sur le moyen de détection (10), l'au moins une unité de déclenchement (11) se déclenchant en cas de variation prédéterminée de la résistance, et/ou en ce que l'au moins un moyen de détection (10) comprend un capteur optique qui comporte un guide de lumière déformable élastiquement et dont les valeurs de mesure varient en cas d'action mécanique sur le guide de lumière, l'au moins une unité de déclenchement (11) se déclenchant en cas de variation prédéterminée de la valeur de mesure et/ou **en ce que** l'au moins un moyen de détection (10) comprend un capteur d'écoulement qui comprend un tuyau déformable élastiquement, à travers lequel s'écoule un fluide, et dont les valeurs de mesure d'écoulement varient en cas d'action mécanique sur le tuyau, l'au moins une unité de déclenchement (11) se déclenchant en cas de variation prédéterminée des valeurs de mesure d'écoulement, et/ou **en ce que** l'au moins un moyen de détection (10) comprend un capteur d'accélération (30) qui est disposé sur un transmetteur de vibrations et dont les valeurs de mesure d'accélération varient en cas d'action mécanique sur le transmetteur de vibrations, l'au moins une unité de déclenchement (11) se déclenchant en cas de variation prédéterminée des valeurs de mesure d'accélération.

9. Dispositif de transport de personnes (1) selon l'une des revendications précédentes, **caractérisé en ce que** le moyen de détection (10) est disposé sur au moins un élément d'amortissement (24) ou à l'intérieur de celui-ci, l'au moins un élément d'amortissement (24) étant disposé au-dessous des éléments formant marches (3) de la zone de transport (8) entre la première station d'inversion (6) et la deuxième station d'inversion ( 7 ).

10. Dispositif de transport de personnes (1) selon la revendication 9, **caractérisé en ce que** l'au moins un élément d'amortissement (24) comprend au moins une partie d'amortissement (28), en un matériau déformable élastiquement, qui s'étend sur l'extension longitudinale de l'élément d'amortissement (24).

11. Dispositif de transport de personnes (1) selon la revendication 10, **caractérisé en ce que** l'au moins une partie d'amortissement (28) comporte au moins deux parois de support latérales (26) entre lesquelles au moins un espace de compression (27) est formé dans la direction d'extension longitudinale de l'élément d'amortissement (24), lequel espace de compression est comprimé par un élément formant marche descendant (3) lors d'une action mécanique sur l'élément d'amortissement (24).

12. Dispositif de transport de personnes (1) selon l'une des revendications 9 à 11, **caractérisé en ce que** l'au moins un élément d'amortissement (24) est disposé sur au moins un élément porteur (23).

13. Dispositif de transport de personnes (1) selon la revendication 12, **caractérisé par** au moins une structure de support (21) à l'intérieur de laquelle la bande transporteuse (2) est guidée, l'au moins un élément porteur (23) étant disposé sur la structure de support (21), l'au moins un élément porteur (23) étant en particulier un profilé métallique disposé sur la structure de support (21).

14. Dispositif de transport de personnes (1) selon la revendication 12 ou la revendication 13, **caractérisé en ce qu'**un élément de support est disposé comme élément porteur (23) au-dessous des éléments formant marches (3) de la zone de transport (8) entre la première station d'inversion (6) et la deuxième station d'inversion (7) dans la direction d'extension longitudinale du dispositif de transport de personnes (1) .

15. Dispositif de transport de personnes (1) selon l'une des revendications précédentes, **caractérisé en ce que** le déclenchement de l'au moins une unité de déclenchement (11) déclenche un arrêt de la bande transporteuse (2) et/ou **en ce que** le déclenchement de l'au au moins une unité de déclenchement (11) déclenche une immobilisation de l'au moins une unité d'entraînement (4) et/ou **en ce que** le déclenchement de l'au moins une unité de déclenchement (11) déclenche un actionnement d'au moins un frein (16) du dispositif de transport de personnes (1).
